# EUROPÄISCHE PATENTANMELDUNG

(11) **EP 3 483 473 A1**
(43) Veröffentlichungstag der Anmeldung: **15.05.2019**
(21) Anmeldenummer: 17201636.2
(22) Anmeldetag: 14.11.2017
(51) Int. Cl.: F16H 1/28, F16H 1/32, F16H 1/46, F16H 57/08

(54) **GETRIEBE**

(71) Anmelder: Kimex Group s.r.o., 040 01 Kosice (SK)
(72) Erfinder: FECKO, Tibor, 08001 Presov (SK)
(74) Vertreter: Jeck, Anton

(57) **Zusammenfassung**

Es wird ein mehrstufiges Getriebe (01) mit einer Planetengetriebestufe und mit einer Zykloidgetriebestufe beschrieben. Die Planetengetriebestufe ist mit einem Sonnenrad (84) und mindestens einem Planetenrad (08) ausgestattet. Die Zykloidgetriebestufe ist mit einem Hohlrad (02) mit einer Hohlradachse (20), mindestens einer in diesem abwälzenden Zykloidenscheibe (05, 06) mit mindestens einer außermittigen Öffnung, und mit einer der Anzahl der Planetenräder (08) entsprechenden Zahl von gemeinsam um die Hohlradachse (20) umlaufend drehbar angeordneten und mit jeweils einem Planetenrad (08) unverdrehbar verbundenen außermittigen Exzenterwellen (03) mit einer der Anzahl der Zykloidenscheiben (05, 06) entsprechenden Zahl von exzentrischen Abschnitten (31, 32), die in jeweils einer außermittigen Öffnung der mindestens einen Zykloidenscheibe (05, 06) drehbar gelagert sind, ausgestattet. Das Getriebe (01) zeichnet sich durch eine Lagerung seiner Getriebestufen gegenüber dem auch als Tragkörper bezeichneten und/oder bezeichenbaren, beispielsweise zumindest einen Teil seines Maschinengestells bildenden Hohlrad (02) mit ausschließlich einseitig des Hohlrads (02) angeordneten Lagerelementen aus.

## Beschreibung

Die Erfindung betrifft ein mehrstufiges Getriebe gemäß dem Oberbegriff des Anspruchs 1, ein Getriebe gemäß dem Oberbegriff des Anspruch 10 sowie ein mehrstufiges Getriebe gemäß dem Oberbegriff des Anspruchs 13.

Zykloidgetriebe und Planetengetriebe sind Getriebeformen, die eine hohe Belastbarkeit, geringen Bauraumbedarf und ein großes Übersetzungsverhältnis aufweisen und darüber hinaus nicht selbsthemmend sind.

Ein Zykloidgetriebe umfasst ein Hohlrad, mindestens eine in diesem abwälzende Zykloidenscheibe mit einer zentralen Öffnung und mit mindestens einer außermittigen Öffnung, sowie eine zentrale Exzenterwelle mit einer der Anzahl der Zykloidenscheiben entsprechenden Zahl von exzentrischen Abschnitten. Auf jedem exzentrischen Abschnitt der zentralen Exzenterwelle ist eine Zykloidenscheibe mit ihrer zentralen Öffnung drehbar angeordnet. Eine höchstens der Anzahl der außermittigen Öffnungen entsprechenden Zahl von gemeinsam um die Achse der zentralen Exzenterwelle drehbar angeordneten außermittigen Elementen wandelt die Bewegungen der einen oder mehreren Zykloidenscheiben bei deren Abwälzung im Hohlrad in eine Rotationsbewegung einer Welle um. Typischerweise sind die außermittigen Elemente Teil eines Ausgangsorgans, welches mit einer Ausgangswelle verbunden sein kann, diese umfassen oder von dieser umfasst sein kann.

Ein Planetengetriebe ist ein beispielsweise Stirn- oder Reibradgetriebe, welches neben gestellfesten Wellen auch Wellen besitzt, die auf Kreisbahnen im Gestell umlaufen. Die Achsen der umlaufenden Wellen können parallel zu den Achsen der gestellfesten Wellen verlaufen. Auf den umlaufenden Wellen drehende Planetenräder umkreisen ein zentrales Sonnenrad.

Wichtig ist in diesem Zusammenhang voranzustellen, dass im vorliegenden Dokument der Begriff Achse im Gegensatz zu dem Begriff Welle eine geometrische Achse und nicht ein Maschinenelement bezeichnet.

Ein besonders hohes Übersetzungsverhältnis kann durch ein zwei- oder mehrstufiges Getriebe erhalten werden, welches ein eine erste Getriebestufe bildendes Zykloidgetriebe und ein eines zweite Getriebestufe bildendes Planetengetriebe kombiniert. Hierbei dienen die Bezeichnungen erste und zweite lediglich der Unterscheidung und stellen keine vorgegebene Reihenfolge dar. Unter anderem ist dies auch dadurch begründet, dass weder Zykloidgetriebe, noch Planentengetriebe selbsthemmend sind. Dementsprechend können deren beispielsweise durch Wellen gebildete Eingangs- und Ausgangsorgane in dem Sinne vertauscht werden, dass sie sowohl von der einen, als auch von der anderen Welle her ohne zu blockieren antreibbar sind.

Nachteilig an der Kombination von Zykloid- und Planetengetriebe in einem mehrstufigen Getriebe ist der hohe Montageaufwand. Dieser ist einerseits bedingt durch den Aufwand zum Zusammenfügen der beidseitig des Hohlrads angeordneten Lagerelemente unter gleichzeitigem Einbringen der zwischen diesen liegenden Bauteile der Getriebestufen. Erschwert wird dies andererseits durch die insgesamt engen Platzverhältnisse des kompakt bauenden Getriebes.

Durch WO 2017/076506 A1 ist ein mehrstufiges Getriebe mit einer Planetengetriebestufe und mit einer Zykloidgetriebestufe bekannt. Die Planetengetriebestufe ist mit einem Sonnenrad und drei Planetenrädern ausgestattet. Die Zykloidgetriebestufe ist ausgestattet mit:
- einem Hohlrad,
- zwei um 180° zueinander versetzt in diesem abwälzenden Zykloidenscheiben mit mindestens drei außermittigen Öffnungen,
- einer zentralen Exzenterwelle mit zwei entsprechend um 180° zueinander versetzten exzentrischen Abschnitten, auf denen jeweils eine der Zykloidenscheiben drehbar angeordnet ist, sowie
- einer der Anzahl der Planetenräder entsprechenden Zahl von mit jeweils einem Planetenrad unverdrehbar verbundenen außermittigen Exzenterwellen mit einer der Anzahl der Zykloidenscheiben entsprechenden Zahl von exzentrischen Abschnitten, mit denen jede außermittige Exzenterwelle in je einer außermittigen Öffnung der Zykloidenscheiben drehbar gelagert ist.
Die außermittigen Exzenterwellen bilden die eingangs erwähnten Elemente, welche die Bewegungen der Zykloidenscheiben bei deren Abwälzung im Hohlrad in eine Rotationsbewegung umwandeln.

Durch WO 2017/008874 A1 ist ein ebensolches Getriebe bekannt, bei dem zur Vereinfachung der Montage die Zykloidgetriebestufe und die Planetengetriebestufe verbindenden, zumindest Teile eines Ein- oder Ausgangsorgans des Zykloidgetriebes bildenden Exzenterwellen unrunde Abschnitte aufweisen, auf denen je ein Planetenrad der Planetengetriebestufe angeordnet ist. Die Lagerung des Getriebes umfasst beiderseits des Hohlrads angeordnete Lagerelemente.

Eine Aufgabe der Erfindung ist es, ein mehrstufiges Getriebe mit vereinfachtem Montageaufwand zu schaffen.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Die Erfindung betrifft demnach ein mehrstufiges Getriebe mit einer Planetengetriebestufe mit einem Sonnenrad und mindestens einem Planetenrad und einer Zykloidgetriebestufe mit einem Hohlrad, mindestens einer in diesem abwälzenden Zykloidenscheibe mit mindestens einer außermittigen Öffnung, einer der Anzahl der Planetenräder entsprechenden Zahl von gemeinsam um die Achse des Hohlrads umlaufend drehbar angeordneten und mit jeweils einem Planetenrad unverdrehbar verbundenen außermittigen Exzenterwellen mit einer der Anzahl der Zykloidenscheiben entsprechenden Zahl von exzentrischen Abschnitten, mit jedem von denen die eine oder mehreren außermittigen Exzenterwellen in jeweils einer außermittigen Öffnung der mindestens einen Zykloidenscheibe drehbar gelagert sind.

Das Getriebe kann eine zentrale Exzenterwelle mit einer der Anzahl der Zykloidenscheiben entsprechenden Zahl von exzentrischen Abschnitten aufweisen, auf jedem von denen eine Zykloidenscheibe drehbar angeordnet ist.

Die Achse des Hohlrads stimmt mit der Achse der zentralen Exzenterwelle überein. Mit anderen Worten ist das Hohlrad koaxial zur Achse der zentralen Exzenterwelle angeordnet.

Das Getriebe kann darüber hinaus durch außermittige Öffnungen der einen oder mehreren Zykloidenscheiben hindurchgreifende Elemente aufweisen, welche die Bewegungen der Zykloidenscheiben bei deren Abwälzung im Hohlrad in eine Rotationsbewegung umwandeln.

Die außermittigen Exzenterwellen können hierbei die erwähnten Elemente bilden, welche die Bewegungen der Zykloidenscheiben bei deren Abwälzung im Hohlrad in eine Rotationsbewegung umwandeln.

Das Getriebe zeichnet sich durch eine Lagerung seiner Getriebestufen gegenüber dem beispielsweise zumindest einen Teil seines Maschinengestells bildenden Hohlrad mit ausschließlich einseitig des Hohlrads angeordneten Lagerelementen aus.

Das Maschinengestell ist die Summe aller tragenden Teile des ein komplexes Maschinenelement bildenden Getriebes. Es trägt insbesondere über Lager die beweglichen Maschinenteile.

Zusätzliche, über eine vollständige Lösung der gestellten Aufgabe hinausgehende Vorteile gegenüber dem Stand der Technik ergeben sich beispielsweise wie folgt:
Der Einfachheit halber wird im Nachfolgenden zur Erläuterung des Prinzips der Begriff Zahn stellvertretend für alle denkbare Ausgestaltungen des Kontakts zwischen Zykloidenscheibe und Hohlrad verwendet.

Ein Exzenter eines Zykloidgetriebes treibt eine Zykloidenscheibe mit n Zähnen an, die sich in einem fest stehenden Gehäuse mit n+1 Zähnen abwälzt. Die Zykloidenscheibe wälzt sich dabei über die Zähne des Gehäuses ab. Je Umdrehung der Eingangswelle und damit des Exzenters bewegt sich die Zykloidenscheibe und mit ihr die Ausgangswelle um einen Zahn weiter. So entstehen kleinere Drehzahlen entgegen der Drehrichtung der Eingangswelle. Das Übersetzungsverhältnis i, für welches i=n/((n+1)-n) gilt, entspricht dabei der Anzahl n der Zähne der Zykloidenscheibe. Das Übersetzungsverhältnis i entspricht dem Verhältnis der Anzahl der Umdrehungen der Eingangswelle zur Anzahl der Umdrehungen der Ausgangswelle.

Um eine hohe Leistungsdichte einhergehend mit einer stets gleichmäßigen Massenverteilung zu erhalten, ist bekannt, Zykloidgetriebe mit zwei oder mehr stets gleichmäßig um die Eingangswelle verteilt angeordneten Exzentern und einer der Anzahl der Exzenter entsprechenden Anzahl von Zykloidenscheiben auszuführen. Dadurch können auch hohe Drehzahlen und hohe Kraftübertragungen, entsprechend hohe Leistungen bewältigt werden.

Um eine über einen vollen Durchlauf eines Zykloidgetriebes entsprechend einer vollen Umdrehung der Ausgangswelle stets gleichmäßige Massenverteilung durch eine gleichmäßig um die Eingangswelle verteilte Anordnung von zwei oder mehr Zykloidenscheiben zu ermöglichen, sind eine gerade Anzahl von Zähnen im fest stehenden Gehäuse notwendig.

Einstufige Zykloidgetriebe mit zwei oder mehr gleichmäßig um die Eingangswelle verteilt angeordneten Zykloidenscheiben weisen damit ein ungerades Übersetzungsverhältnis auf.

Dadurch sind solche Zykloidgetriebe nur eingeschränkt in Verbindung beispielsweise mit Stellantrieben nutzbar, bei denen zum Erhalt eines eindeutigen Verhältnisses zwischen Eingangsumdrehungen und Ausgangsumdrehungen eines Getriebes ein gerades Übersetzungsverhältnis bevorzugt wird.

Zum Erhalt eines geraden Übersetzungsgetriebes kombiniert die Erfindung eine Zykloidgetriebestufe mit einer Planetengetriebestufe zu einem mehrstufigen Getriebe. Dieses beispielsweise zwei- oder mehrstufige Getriebe kann ein gerades Übersetzungsverhältnis aufweisen.

Darüber hinaus kann das eine Kombination von Zykloid- und Planetengetriebe umfassende mehrstufige Getriebe ein eine dritte Getriebestufe bildendes Stirnradgetriebe umfassen, vorteilhaft beispielsweise ein mit dem Sonnenrad seitens des Planetengetriebes in Eingriff stehendes Ritzel.

Das Getriebe kann alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Denkbar ist außerdem ein mehrstufiges Getriebe mit einer Stirnradgetriebestufe mit einem unverdrehbar beispielsweise mit einer zentralen Exzenterwelle verbundenen Rad und einem mit diesem in Eingriff stehenden Ritzel und einer Zykloidgetriebestufe mit einem Hohlrad, mindestens einer in diesem abwälzenden Zykloidenscheibe mit mindestens einer außermittigen Öffnung, einer oder mehrerer gemeinsam um die Achse des Hohlrads umlaufend drehbar angeordneten außermittigen Exzenterwellen mit einer der Anzahl der Zykloidenscheiben entsprechenden Zahl von exzentrischen Abschnitten, mit jedem von denen die eine oder mehreren außermittigen Exzenterwellen in jeweils einer außermittigen Öffnung der mindestens einen Zykloidenscheibe drehbar gelagert sind. Ein solches Getriebe kann alternativ oder zusätzlich einzelne oder eine Kombination mehrerer voranstehend und nachfolgend zum mehrstufigen Getriebe mit Planeten- und Zykloidgetriebestufe beschriebene Merkmale aufweisen, und/oder einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Zusätzliche, über die vollständige Lösung der gestellten Aufgabe und/oder über die voran zu den einzelnen Merkmalen genannten Vorteile hinausgehende Vorteile gegenüber dem Stand der Technik sind nachfolgend aufgeführt.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
- Fig. 1: ein erstes Ausführungsbeispiel eines Getriebes in einem Längsschnitt entlang der Linie A-A in Fig. 2.
- Fig. 2: das Getriebe aus Fig. 1 in einem dort entlang der Linie B-B verlaufenden Querschnitt.
- Fig. 3: das Getriebe aus Fig. 1 in einem dort entlang der Linie C-C verlaufenden Querschnitt.
- Fig. 4: das Getriebe aus Fig. 1 in einem dort entlang der Linie D-D verlaufenden Querschnitt.
- Fig. 5: das Getriebe aus Fig. 1 in einem dort entlang der Linie E-E verlaufenden Querschnitt.
- Fig. 6: das Getriebe aus Fig. 1 in einem dort entlang der Linie F-F verlaufenden Querschnitt.
- Fig. 7: eine Detailansicht eines zweiten Ausführungsbeispiel eines Getriebes in einem Längsschnitt.
- Fig. 8: eine Detailansicht eines dritten Ausführungsbeispiel eines Getriebes in einem Längsschnitt.
- Fig. 9: ein viertes Ausführungsbeispiel eines Getriebes in einem Längsschnitt entlang der Linie A-A in Fig. 10.
- Fig. 10: das Getriebe aus Fig. 9 in einem dort entlang der Linie B-B verlaufenden Querschnitt.
- Fig. 11: das Getriebe aus Fig. 9 in einem dort entlang der Linie C-C verlaufenden Querschnitt.
- Fig. 12: das Getriebe aus Fig. 9 in einem dort entlang der Linie D-D verlaufenden Querschnitt.
- Fig. 13: das Getriebe aus Fig. 9 in einem dort entlang der Linie E-E verlaufenden Querschnitt.
- Fig. 14: verschiedene Ausgestaltungen von Details wie etwa Lagerung eines Getriebes.
- Fig. 15: ein fünftes Ausführungsbeispiel eines Getriebes in einem Längsschnitt entlang der Linie A-A in Fig. 16.
- Fig. 16: das Getriebe aus Fig. 15 in einem dort entlang der Linie B-B verlaufenden Querschnitt.
- Fig. 17: das Getriebe aus Fig. 15 in einem dort entlang der Linie C-C verlaufenden Querschnitt.
- Fig. 18: das Getriebe aus Fig. 15 in einem dort entlang der Linie D-D verlaufenden Querschnitt.
- Fig. 19: das Getriebe aus Fig. 15 in einem dort entlang der Linie E-E verlaufenden Querschnitt.
- Fig. 20: das Getriebe aus Fig. 15 in einem dort entlang der Linie F-F verlaufenden Querschnitt.
- Fig. 21: das Getriebe aus Fig. 15 in einem dort entlang der Linie G-G verlaufenden Querschnitt.
- Fig. 22: das Getriebe aus Fig. 15 in einer Explosionsdarstellung.
- Fig. 23: eine erste Detailansicht der Explosionsdarstellung in Fig. 22 des Getriebes aus Fig. 15.
- Fig. 24: eine zweite Detailansicht der Explosionsdarstellung in Fig. 22 des Getriebes aus Fig. 15.
- Fig. 25: eine Detailansicht eines sechsten Ausführungsbeispiel eines Getriebes in einem Längsschnitt.
- Fig. 26: eine Detailansicht eines siebten Ausführungsbeispiel eines Getriebes in einem Längsschnitt.
- Fig. 27: ein Getriebe in einem Längsschnitt entlang der Linie A-A in Fig. 28.
- Fig. 28: das Getriebe aus Fig. 27 in einem dort entlang der Linie B-B verlaufenden Querschnitt.
- Fig. 29: eine Detailansicht eines Getriebes in einem Längsschnitt.
- Fig. 30: eine Detailansicht eines Getriebes in einem Längsschnitt.
- Fig. 31: ein Getriebe in einem Längsschnitt.

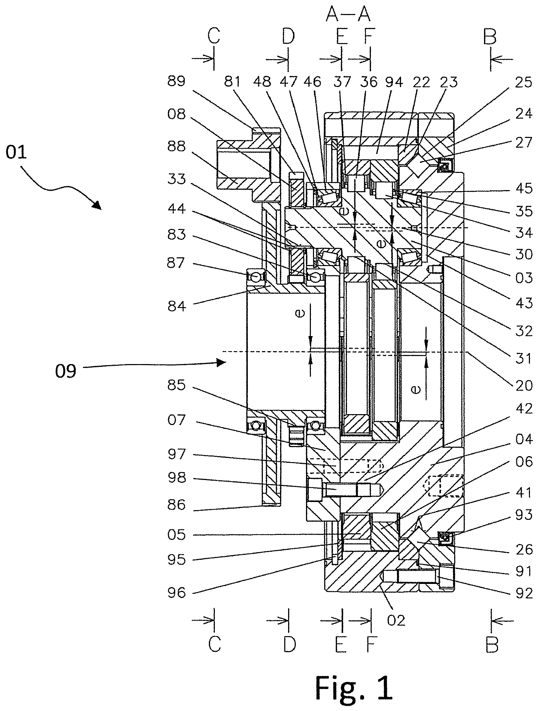

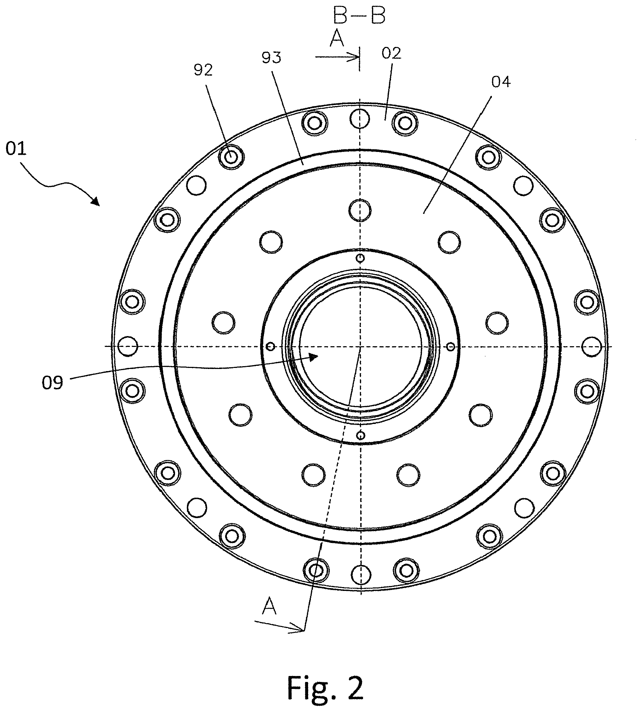

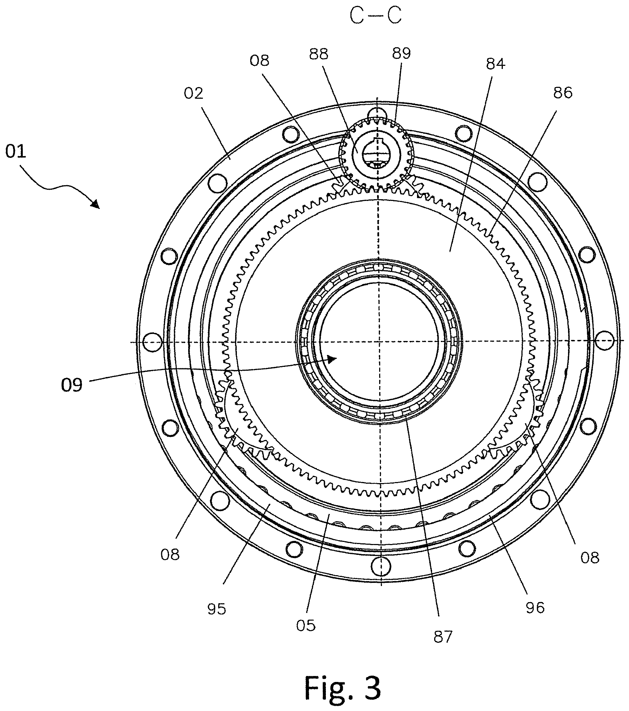

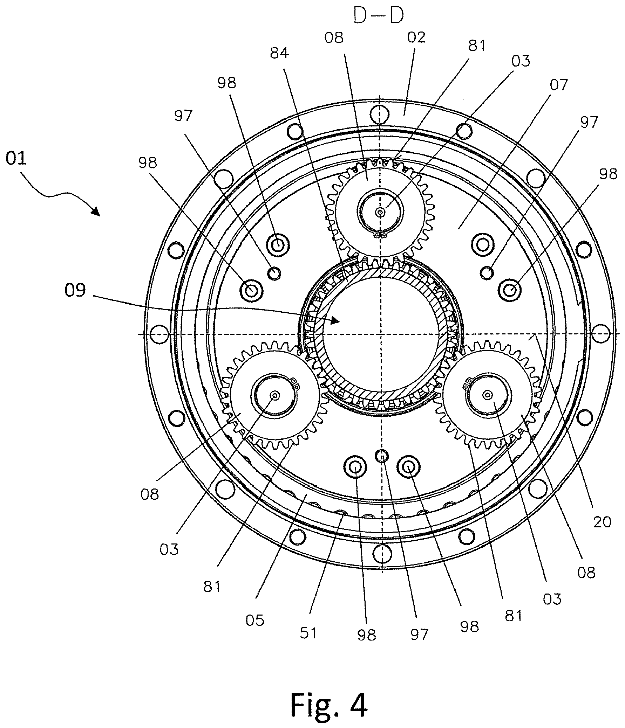

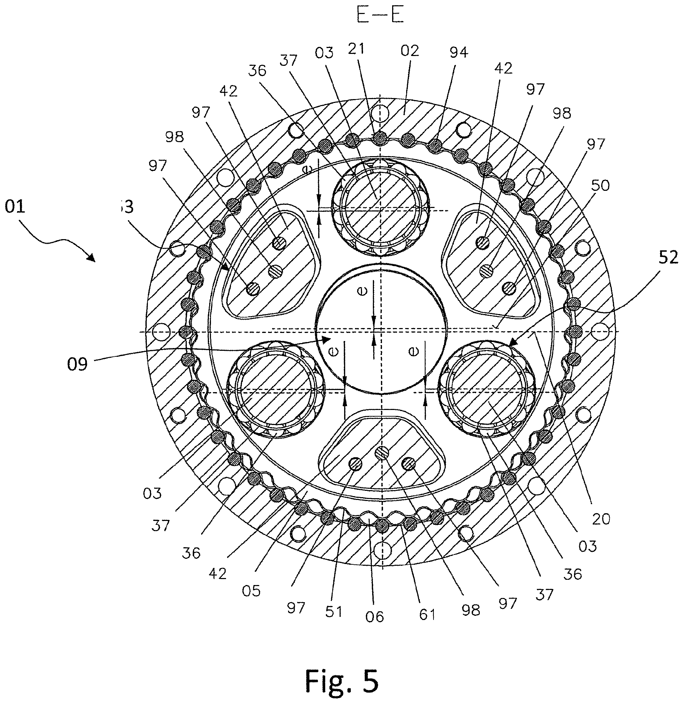

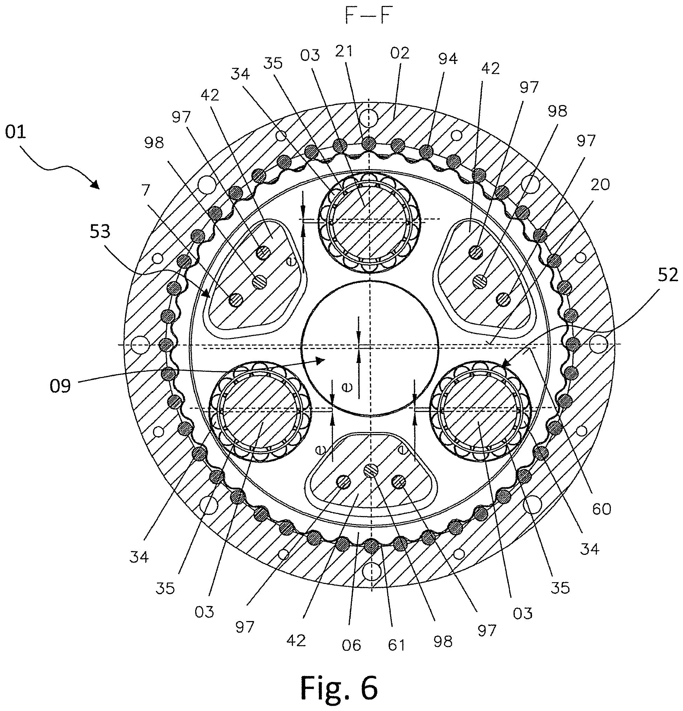

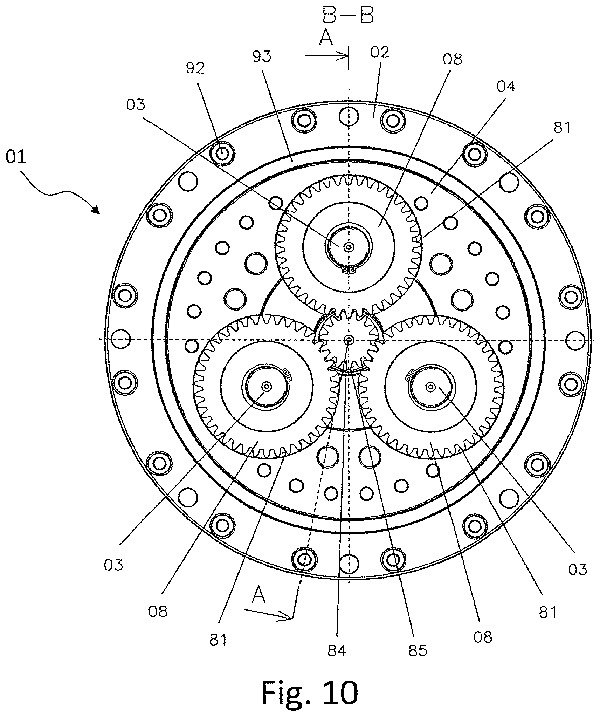

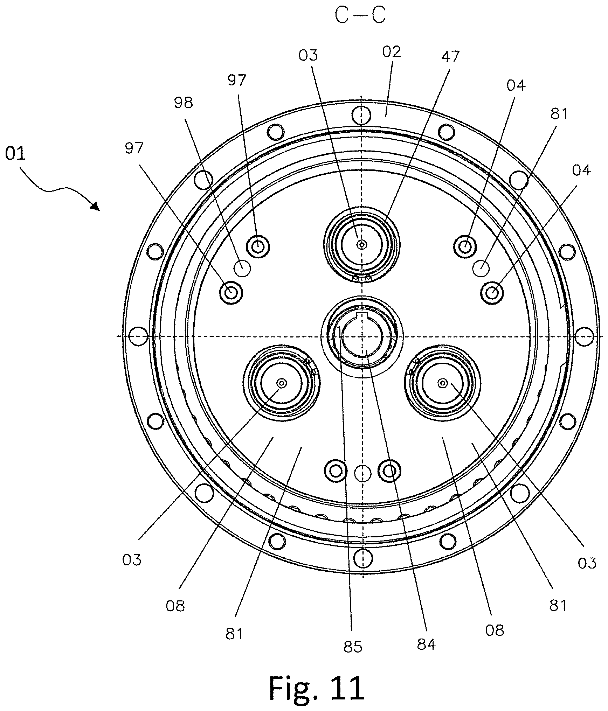

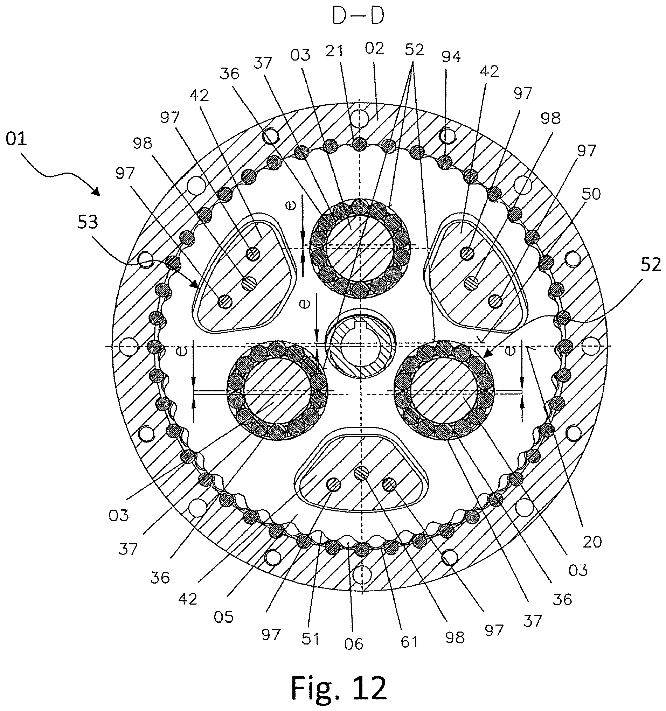

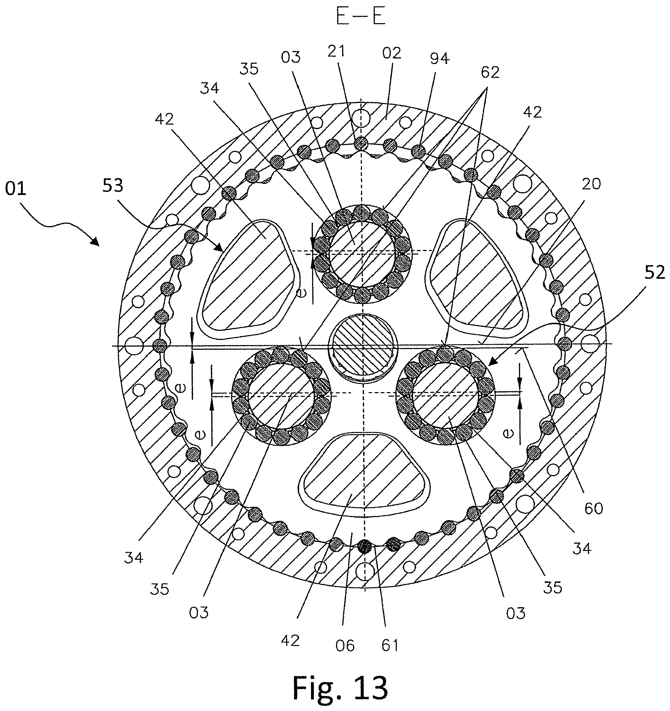

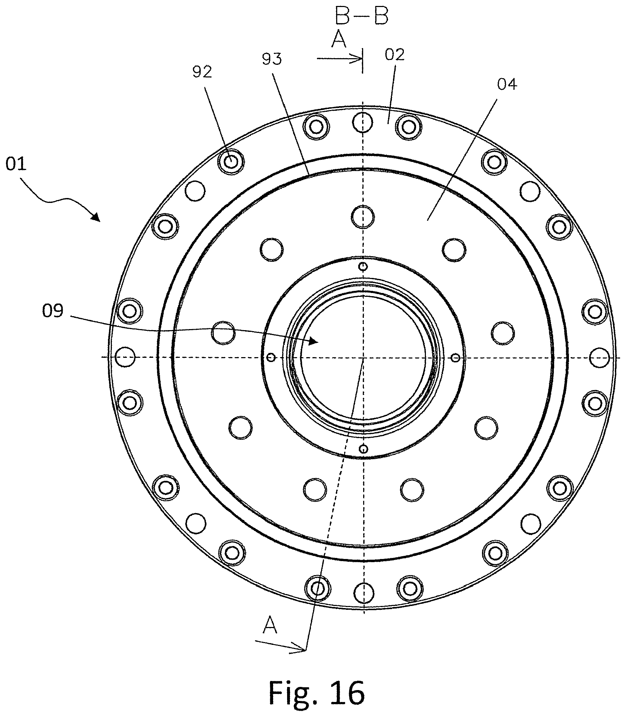

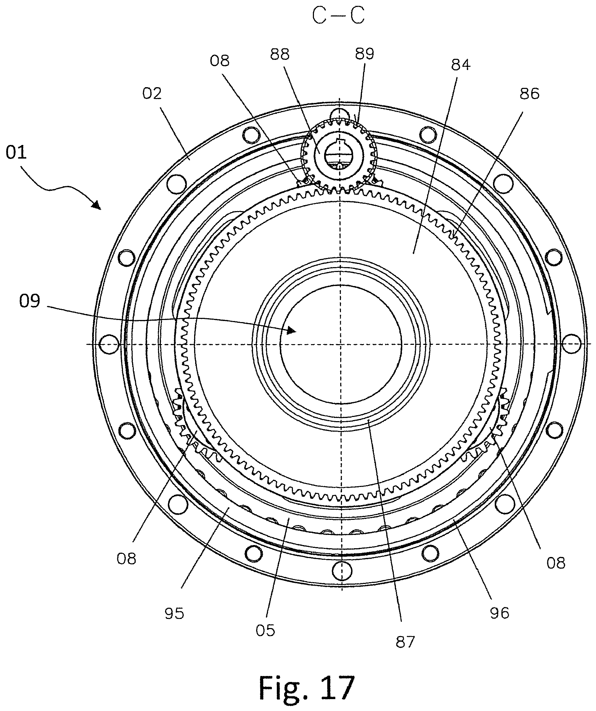

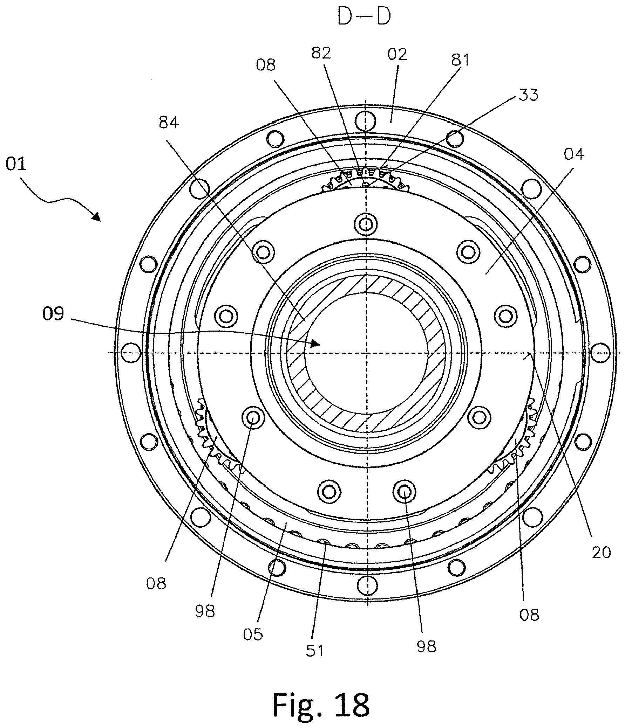

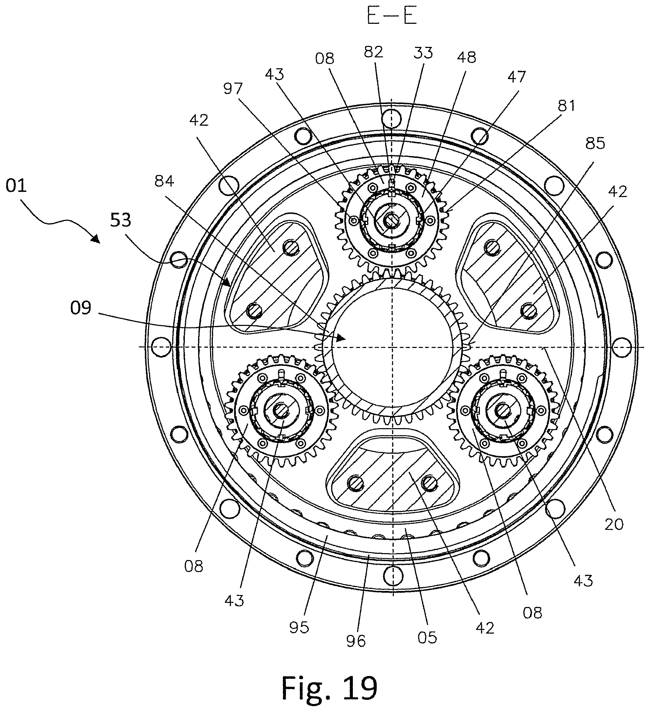

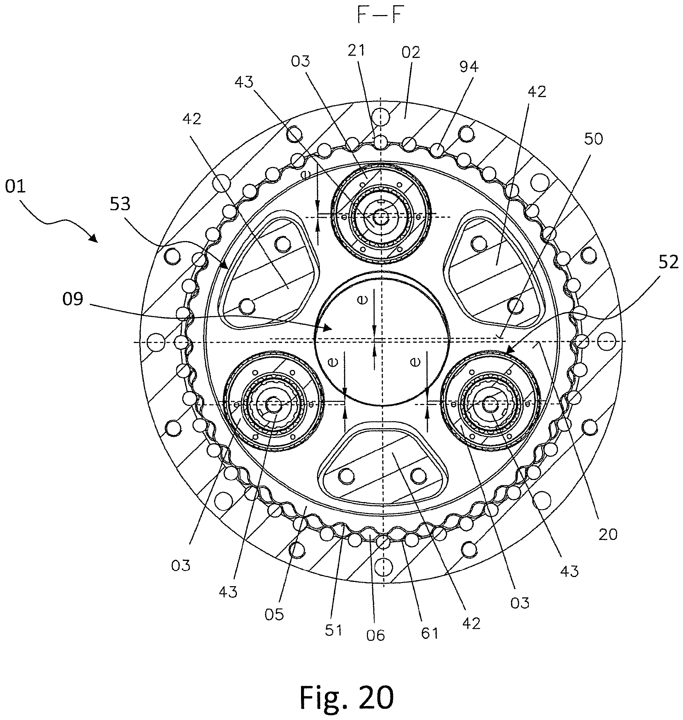

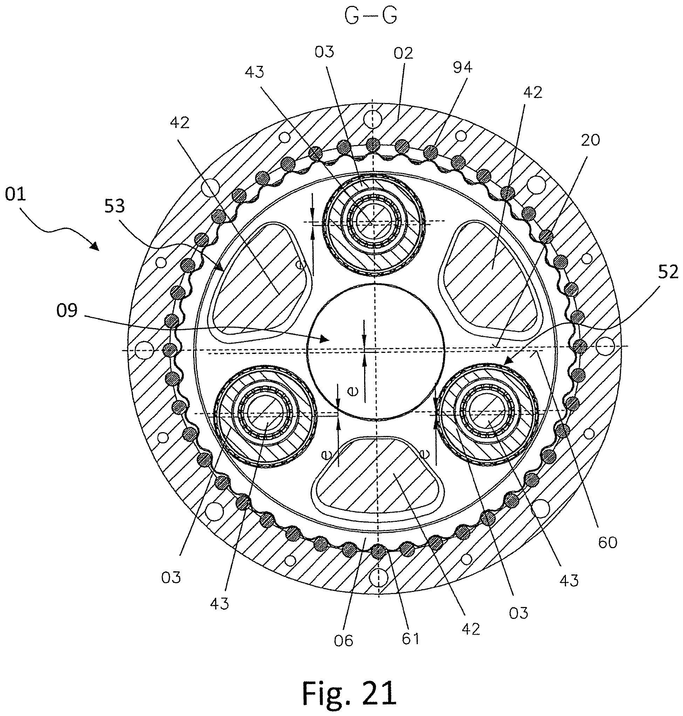

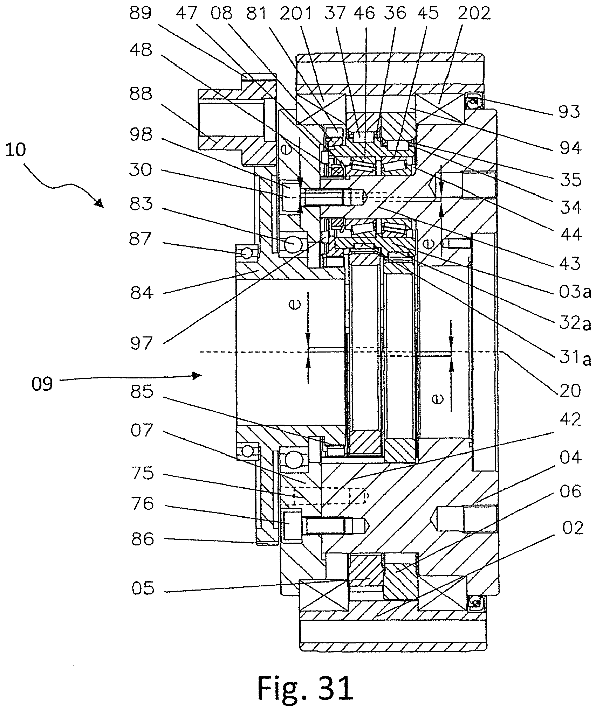

Ein in Fig. 1 bis Fig. 26 ganz oder in Teilen dargestelltes mehrstufiges Getriebe 01 sowie ein in Fig. 31 dargestelltes Getriebe 10 umfasst eine Planetengetriebestufe und eine Zykloidgetriebestufe.

Die Planetengetriebestufe ist mit einem Sonnenrad 84 und mindestens einem Planetenrad 08 ausgestattet.

Die Zykloidgetriebestufe ist mit einem sich entlang einer Hohlradachse 20 erstreckenden, koaxial zu dieser angeordneten Hohlrad 02, mindestens einer in diesem abwälzenden Zykloidenscheibe 05, 06 und mit einer der Anzahl der Planetenräder 08 entsprechenden Zahl von außermittigen Exzenterwellen 03 ausgestattet.

Die außermittigen Exzenterwellen 03 sind gemeinsam um die Hohlradachse 20 umlaufend drehbar angeordnet.

Jede der außermittigen Exzenterwellen 03 weist eine der Anzahl der Zykloidenscheiben 05, 06 entsprechenden Zahl von exzentrischen Abschnitten 31, 32 auf, mit denen die außermittigen Exzenterwellen 03 in jeweils einer außermittigen Öffnung der mindestens einen Zykloidenscheibe 05, 06 drehbar gelagert sind.

Jede Zykloidenscheibe 05, 06 weist eine mindestens der Zahl der außermittigen Exzenterwellen 03 des Getriebes 01 entsprechende Anzahl von außermittigen Öffnungen 52, 53 auf.

Dabei sind zumindest eine der Zahl der außermittigen Exzenterwellen 03 des Getriebes 01 entsprechende Anzahl von außermittigen Öffnungen 52 zur drehbaren Lagerung der außermittigen Exzenterwellen 03 mit ihren exzentrischen Abschnitten 31, 32 in jeder Zykloidenscheibe 05, 06 vorgesehen.

Jede der in ihrer Anzahl der Zahl der Planetenräder 08 entsprechenden außermittigen Exzenterwellen 03 ist mit jeweils einem Planetenrad 08 unverdrehbar verbunden.

Demnach betrifft die Erfindung ein mehrstufiges Getriebe 01 mit einer Planetengetriebestufe mit einem Sonnenrad 84 und mindestens einem Planetenrad 08 und einer Zykloidgetriebestufe mit einem Hohlrad 02 mit einer Hohlradachse 20, mindestens einer in diesem abwälzenden Zykloidenscheibe 05, 06 mit mindestens einer außermittigen Öffnung, und einer der Anzahl der Planetenräder 08 entsprechenden Zahl von gemeinsam um die Hohlradachse 20 umlaufend drehbar angeordneten und mit jeweils einem Planetenrad 08 unverdrehbar verbundenen außermittigen Exzenterwellen 03 mit einer der Anzahl der Zykloidenscheiben 05, 06 entsprechenden Zahl von exzentrischen Abschnitten 31, 32, die in jeweils einer außermittigen Öffnung der mindestens einen Zykloidenscheibe 05, 06 drehbar gelagert sind.

Das Getriebe 01 zeichnet sich aus durch eine Lagerung seiner Getriebestufen gegenüber dem auch als Tragkörper bezeichneten und/oder bezeichenbaren, beispielsweise zumindest einen Teil seines Maschinengestells bildenden Hohlrad 02 mit ausschließlich einseitig des Hohlrads 02 angeordneten Lagerelementen 26, 27.

Die außermittigen Exzenterwellen 03 können Elemente bilden, welche die Bewegungen der Zykloidenscheiben bei deren Abwälzung im Hohlrad 02 in eine Rotationsbewegung, beispielsweise eine gemeinsame Rotationsbewegung ihrer selbst und/oder beispielsweise eines Drehkörpers um die Hohlradachse 20 umwandeln.

Das Maschinengestell ist die Summe aller tragenden Teile des ein komplexes Maschinenelement bildenden Getriebes 01. Es trägt insbesondere über Lager die beweglichen Maschinenteile. Die Hohlradachse 20 des Hohlrads 02 verläuft hierbei parallel zu den Achsen 30 der außermittigen Exzenterwellen 03.

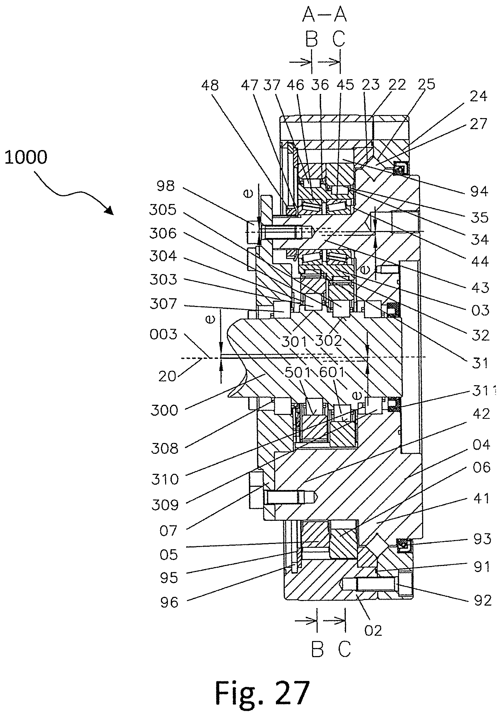

Das Getriebe 01 kann wie am Beispiel eines Getriebes 1000 in Fig. 27, Fig. 28, Fig. 29, Fig. 30 dargestellt, eine zentrale Exzenterwelle 300 mit einer der Anzahl der Zykloidenscheiben 05, 06 entsprechenden Zahl von exzentrischen Abschnitten 301, 302 umfassen, auf jedem von denen eine Zykloidenscheibe 05, 06 beispielsweise mit einer hierfür vorgesehenen zentralen Öffnung 501, 601 drehbar angeordnet ist.

Die Hohlradachse 20 des Hohlrads 02 stimmt hierbei mit der Achse 003 der zentralen Exzenterwelle 300 überein. Mit anderen Worten ist das Hohlrad 02 koaxial zur Achse 003 der zentralen Exzenterwelle 300 angeordnet.

Das Getriebe 01 kann ein Rad 84 aufweisen, welches unverdrehbar mit einer gegebenenfalls vorgesehenen zentralen Exzenterwelle 300 verbunden ist.

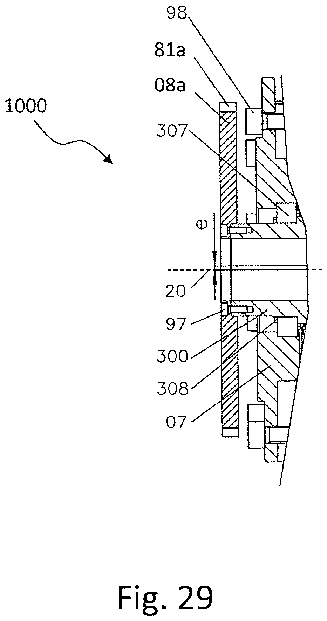

Über dieses Rad 8 kann das Getriebe 01 angetrieben werden (Fig. 29).

Alternativ oder zusätzlich kann das Getriebe 01 gemeinsam um die Hohlradachse 20 umlaufend angeordnete, durch außermittige Öffnungen 53 der mindestens einen Zykloidenscheibe 05, 06 hindurchgreifende Elemente 42 aufweisen.

Die Elemente 42 dienen hauptsächlich zur Verstärkung der Befestigung des Flansches 07 an den Drehkörper 04 und zur Erhöhung der Steifigkeit dieser Verbindung.

Darüber hinaus können die Elemente 42 allein oder beispielsweise zusätzlich zu Fortsätzen 43, auf denen die außermittigen Exzenterwellen drehbar gelagert sind, dazu dienen, die Bewegungen der mindestens einen Zykloidenscheibe 05, 06 bei deren Abwälzung im Hohlrad 02 in eine Rotationsbewegung beispielsweise eines mit den Elementen 42 verbundenen Drehkörpers 04 um die Hohlradachse 20 des Hohlrads 02 umzuwandeln.

Vorzugsweise sind die Lagerelemente 26, 27 mit denen die Getriebestufen des Getriebes 01 ausschließlich einseitig gegenüber dem Hohlrad 02 gelagert sind, auf der der Planetengetriebestufe abgewandten Seite des Hohlrads 02 angeordnet.

Das Getriebe 01 kann eine zusätzliche Getriebestufe umfassen, wie in Fig. 1, Fig. 7, Fig. 8, Fig. 15, Fig. 22, Fig. 25, Fig. 26 und in Fig. 31 für ein Getriebe 10 dargestellt.

Die zusätzliche Getriebestufe kann ein mit dem Sonnenrad 84 der Planetengetriebestufe oder mit einem mit diesem unverdrehbar verbundenen Rad in Eingriff stehendes Ritzel 88 umfassen (Fig. 1, Fig. 7, Fig. 8, Fig. 15, Fig. 22, Fig. 25, Fig. 26, Fig. 31).

Demnach kann das eine Kombination von Zykloid- und Planetengetriebe umfassende mehrstufige Getriebe 01 ein eine dritte Getriebestufe bildendes Stirnradgetriebe umfassen, vorteilhaft beispielsweise ein mit dem Sonnenrad 84 seitens des Planetengetriebes oder mit einem unverdrehbar mit dem Sonnenrad 84 verbundenen Stirnrad in Eingriff stehendes Ritzel 88.

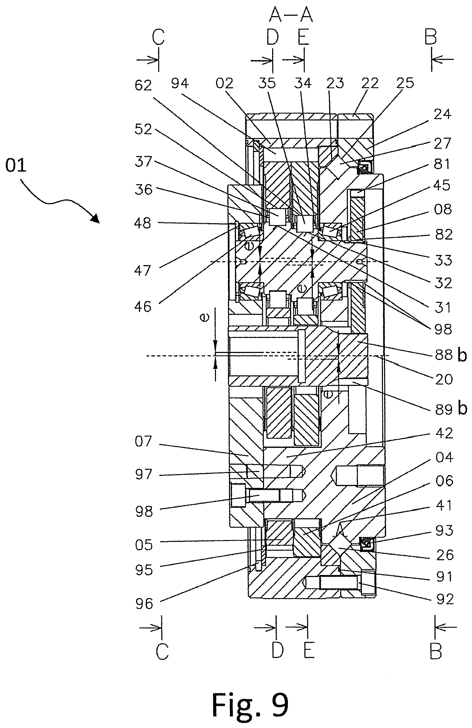

Alternativ kann das Sonnenrad 84 des Getriebes 01 direkt durch ein Ritzel 88 einer koaxial zur Hohlradachse 20 verlaufenden Welle gebildet sein (Fig. 9).

Das Getriebe 01 kann eine entlang der Hohlradachse 20 des Hohlrads 02 verlaufende zentrale Durchgangsöffnung 09 aufweisen.

Die außermittigen Exzenterwellen 03 der Zykloidengetriebestufe des Getriebes 01 können an einem bereits erwähnten Drehkörper 04 drehbar gelagert angeordnet sein. Der Drehkörper 04 selbst ist hierbei um die Hohlradachse 20 drehbar am Hohlrad 02 gelagert angeordnet.

Der gegebenenfalls vorgesehene Drehkörper 04 des Getriebes 01 kann einen unverdrehbar mit ihm verbundenen Flansch 07 umfassen.

Der Drehkörper 04 ist hiernach zumindest zweiteilig ausgebildet und umfasst neben einem beispielsweise einen Eintrittsflansch bildenden Grundkörper zusätzlich den einen Austrittsflansch bildenden Flansch 07. Demnach sind Grundkörper und Flansch 07 Teile des am Hohlrad 02 um die Hohlradachse 20 drehbar gelagerten Drehkörpers 04.

Die außermittigen Exzenterwellen 03 können mittels in Käfigen 47b gelagerte Wälzelemente 45b und 46b umfassenden Lagerelementen 45, 46 am Drehkörper 04 drehbar gelagert sein.

Beispielsweise können Wälzelemente 45b und 46b direkt an den außermittigen Exzenterwellen 03 verwendet werden, die in Käfigen 44b und 47b gelagert sind.

Hierdurch sind die außermittigen Exzenterwellen 03 in integrierten Wälzlagerungen gelagert. Die Lagerbahnen für die Wälzelemente 45b und 46b der Lagerelemente 45, 46 sind somit direkt an den außermittigen Exzenterwellen 03 gebildet sowie beispielsweise an dem mit dem Drehkörper 04 verbundenen Flansch 07 als auch an dem Drehkörper 04 selbst beziehungsweise an dessen Grundkörper.

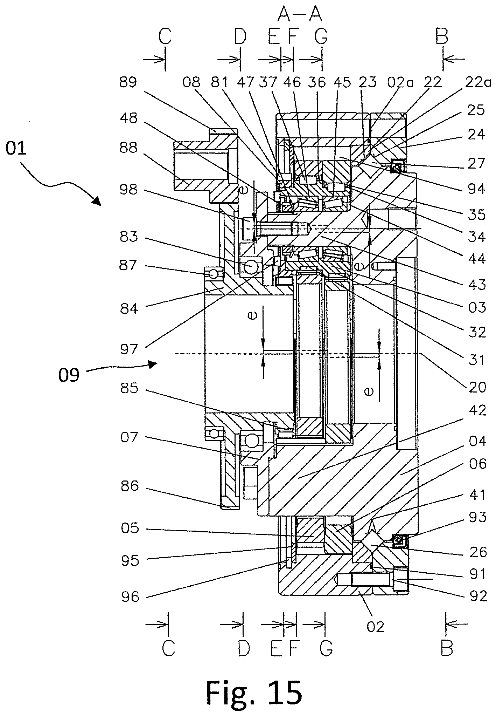

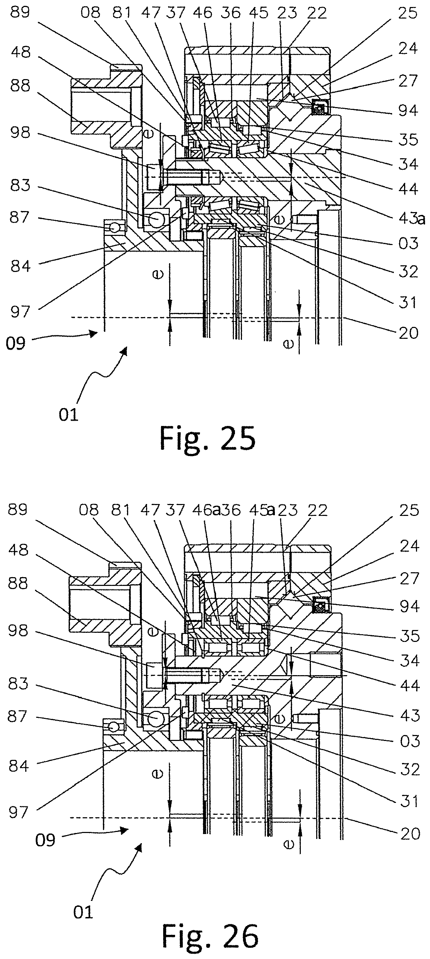

Als Wälzelemente können die Lagerelemente 45, 46 beispielsweise Kegelrollen umfassen (Fig. 15). Alternativ können die Lagerelemente 45, 46 beispielsweise Zylinderrollen 45a, 46a vorsehen (Fig. 26).

Diese Lagerelemente 45 und 46 können auch derart ausgebildet sein, so dass beispielsweise in Käfigen gefasste Zylinderrollen 45a, 46a zwischen die integrierten Lagerungsflächen verwendet werden können, die an den Fortsätzen 43 und außermittigen Exzenterwellen 03 gebildet sind.

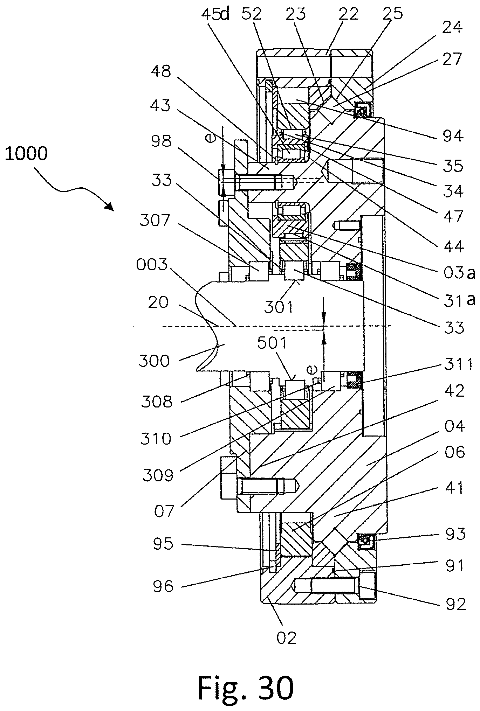

Denkbar sind darüber hinaus Rollenwälzlager 45d (Fig. 30).

Alternativ zu einer drehbaren Lagerung der außermittigen Exzenterwellen 03 im Drehkörper 04 (Fig. 1, Fig. 7, Fig. 8, Fig. 9) können am Drehkörper 04 sich parallel zur Hohlradachse 20 erstreckende Fortsätze 43 außermittig angeordnet sein, um welche die außermittigen Exzenterwellen 03 mit ihren exzentrischen Abschnitten 31, 32 drehbar gelagert angeordnet sind (Fig. 15, Fig. 22, Fig. 24, Fig. 25, Fig. 26, Fig. 27, Fig. 30, Fig. 31).

Die erwähnten Fortsätze 43 können dabei durch in den Drehkörper 04 eingesetzte Stifte gebildet sein (Fig. 25). Dies erleichtert die präzise Bearbeitung der Lagerflächen und der Serienfertigung im Vergleich zu beispielsweise einstückig aus dem Drehkörper 04 herausgearbeiteten Fortsätzen 43.

Die Fortsätze 43 können alternativ oder zusätzlich zu einer drehbaren Lagerung der außermittigen Exzenterwellen 03 einer Umwandlung der Bewegungen der einen oder mehreren Zykloidenscheiben 05, 06 bei deren Abwälzung im Hohlrad 02 in eine Rotationsbewegung des Drehkörpers 04 sowie eines gegebenenfalls mit diesem verbundenen Flanschs 07 dienen.

Das Getriebe 01 kann über das Sonnenrad 84 angetrieben werden beziehungsweise sein.

Zumindest ein oder mehrere Teile der Erfindung können durch ein in Fig. 27, Fig. 28, Fig. 29, Fig. 30 dargestelltes Getriebe 1000 verwirklicht sein.

Hierbei kann es sich beispielsweise um ein mehrstufiges Getriebe 1000 mit einer Stirnradgetriebestufe und mit einer Zykloidgetriebestufe handeln (Fig. 29).

Die Stirnradgetriebestufe kann mit einem unverdrehbar beispielsweise mit einer zentralen Exzenterwelle verbundenen Rad 08a und beispielsweise einem mit diesem in Eingriff stehenden Ritzel ausgestattet sein (Fig. 29).

Die Zykloidgetriebestufe kann wie voranstehend beschrieben mit einem Hohlrad 02, mindestens einer in diesem abwälzenden Zykloidenscheibe 05, 06 mit mindestens einer außermittigen Öffnung, einer oder mehrerer gemeinsam um die Hohlradachse 20 des Hohlrads 02 umlaufend drehbar angeordneten außermittigen Exzenterwellen 03, 03a mit einer der Anzahl der Zykloidenscheiben 05, 06 entsprechenden Zahl von exzentrischen Abschnitten 31, 32, 31a, 32a, mit jedem von denen die eine oder mehreren außermittigen Exzenterwellen 03, 03a in jeweils einer außermittigen Öffnung der mindestens einen Zykloidenscheibe 05, 06 drehbar gelagert sind, ausgestattet sein (Fig. 27, Fig. 28, Fig. 29, Fig. 30).

Fig. 1, Fig. 2, Fig. 3, Fig. 4, Fig. 5, Fig. 6, Fig. 7 und Fig. 8 zeigen Ausführungsbeispiele eines Getriebes 01 mit einer sich entlang der Hohlradachse 20 durch das Getriebe 01 hindurch erstreckenden Durchgangsöffnung 09.

Eine Durchgangsöffnung 09 weisen darüber hinaus das in Fig. 15, Fig. 16, Fig. 17, Fig. 18, Fig. 19, Fig. 20, Fig. 21 dargestellte Getriebe 01 und die in Fig. 25, Fig. 26, Fig. 27, Fig. 28, Fig. 29, Fig. 30 dargestellten Getriebe 1000 auf.

Die Getriebe 01 in Fig. 1, Fig. 2, Fig. 3, Fig. 4, Fig. 5, Fig. 6, Fig. 7 und Fig. 8 sind mit einem ausschließlich auf einer Seite des Getriebes 01 angeordnete Lagerelemente 26, 27 umfassenden Ausgangslager ausgeführt.

Das Getriebe 01 weist außermittige Exzenterwellen 03 auf, die im Drehkörper 04 und im mit dem Drehkörper 04 verbundenen und/oder vom Drehkörper 04 umfassten Flansch 07 drehbar gelagert sind.

Die außermittigen Exzenterwellen 03 sind unverdrehbar mit den Planetenrädern 08 verbunden.

Das Getriebe 01 wird über das Sonnenrad 84 angetrieben, dessen als Außenverzahnung ausgebildete Verzahnung 85 mit den ebenfalls als Außenverzahnungen ausgestalteten Verzahnungen 81 der Planetenräder 08 kämmt.

Das Sonnenrad 84 ist unverdrehbar mit einem Rad mit einer beispielsweise ebenfalls als Außenverzahnung ausgebildeten Verzahnung 86 verbunden oder es umfasst ein solches Rad, oder es wird von einem solchen Rad umfasst.

Ein Ritzel 88 mit einer Verzahnung 89 steht mit der Verzahnung 86 in Eingriff. Das Ritzel 88 treibt das Sonnenrad 84 an.

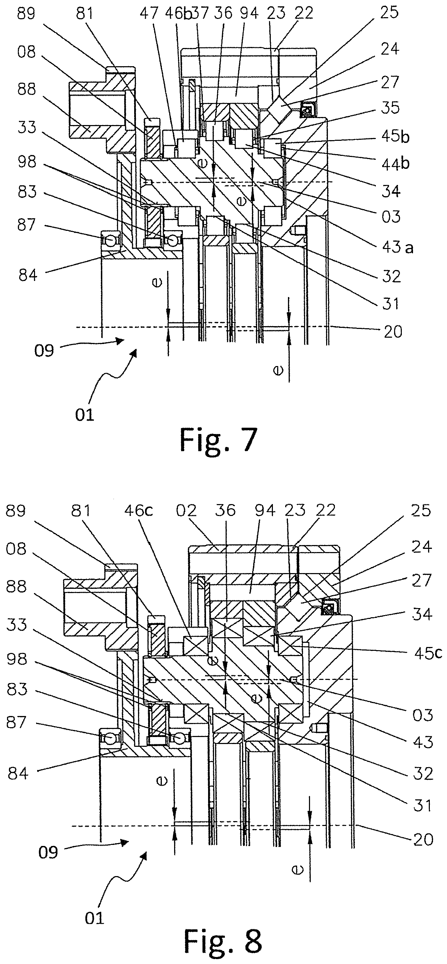

Fig. 7 zeigt Details einer alternativen Ausgestaltung eines solchen Getriebes 01 mit Durchgangsöffnung 09, wobei an den außermittigen Exzenterwellen 03 Wälzelemente 45b und 46b verwendet werden, die in Käfigen 44b und 47b gelagert sein können.

Die außermittigen Exzenterwellen 03 sind hiernach in integrierten Wälzlagerungen gelagert. Die Lagerbahnen für die Wälzelemente 45b und 46b der Wälzlagerungen sind somit direkt an den außermittigen Exzenterwellen 03 gebildet sowie sowohl an dem Drehkörper 04, als auch am Flansch 07.

Fig. 8 zeigt Details einer anderen alternativen Ausgestaltung eines Getriebes 01 mit Durchgangsöffnung 09, wobei Wälzlagerungen 45c und 46c als eine Einheit zur Wellenlagerung angeordnet sind, sowie auch die Wälzelemente 34, 36 zur Lagerung der Zykloidenscheiben 05, 06 an den exzentrischen Abschnitten 31, 32 der außermittigen Exzenterwellen 03.

Fig. 9, Fig. 10, Fig. 11, Fig. 12 und Fig. 13 zeigen ein Getriebe 01 mit einem ausschließlich auf einer Seite des Getriebes 01 angeordnete Lagerelemente 26, 27 umfassenden Ausgangslager.

Die außermittigen Exzenterwellen 03 des in Fig. 9, Fig. 10, Fig. 11, Fig. 12 und Fig. 13 dargestellten Getriebes 01 sind im Drehkörper 04 und im Flansch 07 drehbar gelagert angeordnet.

Der Antrieb des Getriebes 01 erfolgt über die unverdrehbar mit den außermittigen Exzenterwellen 03 verbundenen Planetenräder 08. Die Planetenräder 08 werden über ein für sie als Sonnenrad koaxial zur Hohlradachse 20 angeordnetes Ritzel 88b angetrieben. Das als Triebrad dienende Ritzel 88b verfügt hierzu über eine als Außenverzahnung ausgeführte Verzahnung 89b, welche mit den ebenfalls als Außenverzahnungen gebildeten Verzahnungen 81 der Planetenräder 08 kämmt.

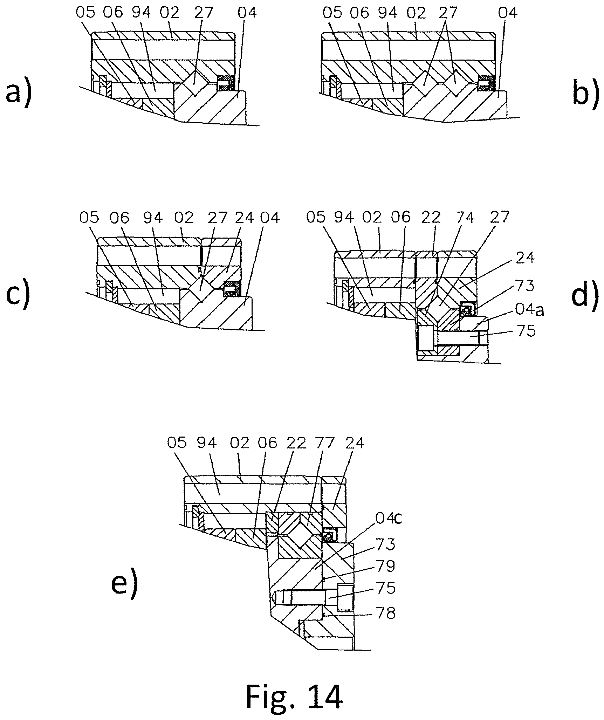

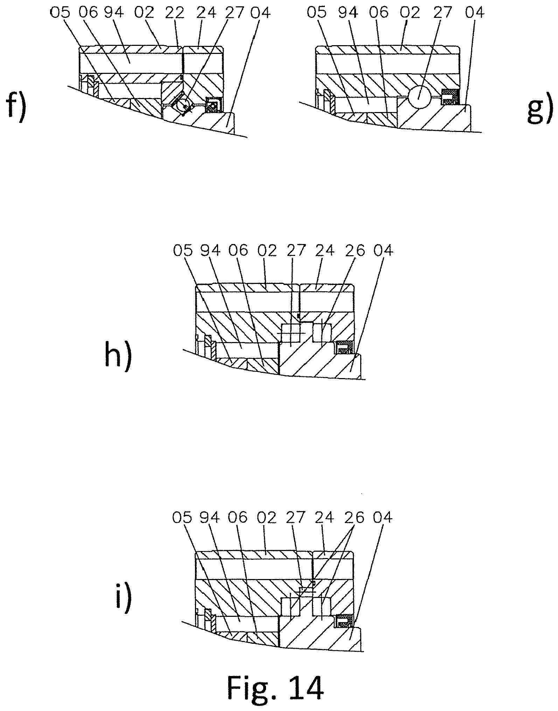

Fig. 14 zeigt verschiedene Ausführungen und Konstruktionsanordnungen des ausschließlich einseitig des Hohlrads 02 angeordnete Lagerelemente 27 umfassenden oder hierdurch gebildeten Ausgangslagers. Das Ausgangslager ist nur auf einer Seite, bevorzugt auf der Ausgangsseite des Getriebes 01 angeordnet. Die Auswahl der konkreten Ausführung des Ausgangslagers ist abhängig von den gewünschten Eigenschaften, Vorgaben, wie etwa Konstruktionsvorgaben, etwa den Bauraum betreffend, Belastung und/oder Beanspruchung sowie - ohne Anspruch auf Vollständigkeit - Kombinationen hiervon.

Fig. 15, Fig. 16, Fig. 17, Fig. 18, Fig. 19, Fig. 20, Fig. 21, Fig. 22, Fig. 23, Fig. 24, Fig. 25 und Fig. 26 zeigen Ausführungsbeispiele eines Getriebes 01 mit durch ausschließlich einseitig des Hohlrads 02 angeordnete Lagerelemente 26, 27 gebildetem Ausgangslager und mit einer sich entlang der Hohlradachse 20 durch das Getriebe 01 hindurch erstreckenden Durchgangsöffnung 09.

Am Drehkörper 04 des Getriebes sind Fortsätze 43 vorgesehen. Die Fortsätze 43 können beispielsweise durch in den Drehkörper 04 eingesetzte Stifte 43a (Fig. 25) gebildet sein.

Auf den Fortsätzen 43 sind die mit exzentrischen Abschnitten 31, 32 versehenen außermittigen Exzenterwellen 03 mittels Wälzlagerungen drehbar gelagert angeordnet.

Die Fortsätze 43 wandeln zusätzlich die Bewegungen der einen oder mehreren Zykloidenscheiben 05, 06 bei deren Abwälzung im Hohlrad 02 in eine Rotationsbewegung des Drehkörpers 04 sowie eines gegebenenfalls mit diesem verbundenen Flanschs 07 um.

Planetenräder 08 sind unverdrehbar mit den außermittigen Exzenterwellen 03 verbunden.

Das Getriebe wird über die Planetenräder 08 angetrieben. Hierzu stehen die Planetenräder 08 mit ihren als Außenverzahnungen ausgebildeten Verzahnungen 81 mit einer ebenfalls als Außenverzahnung ausgebildeten Verzahnung 85 eines Sonnenrads 84 in Eingriff.

Das Sonnenrad 84 ist beispielsweise einstückig (Fig. 15, Fig. 22, Fig. 25, Fig. 26) mit einem weiteren Rad mit einer Verzahnung 86 unverdrehbar verbunden.

Ein als Triebrad dienendes Ritzel 88 ist mit einer Verzahnung 89 versehen, welche mit der Verzahnung 86 in Eingriff steht.

Bei dem in Fig. 25 dargestellten Getriebe 01 sind in den Drehkörper 04 Stifte 43a als Fortsätze 43 eingesetzt, die als beispielsweise Lagerbahnen aufweisende beziehungsweise Wälzkörperlaufflächen umfassende Vorsprünge bearbeitet sind.

Bei dem in Fig. 26 dargestellten Getriebe 01 sind für die Lagerung der außermittigen Exzenterwellen 03 Zylinderrollenlager 45a und 46a verwendet, anstatt der Kegelrollenlager 45 und 46 beim in Fig. 15 dargestellten Getriebe 01.

Diese Zylinderrollenlager 45a und 46a können auch derart ausgebildet sein, dass beispielsweise in Käfigen angeordnete Zylinderrollen zwischen die integrierten Lagerungsflächen verwendet werden können, die an den als Vorsprünge bearbeiteten Fortsätzen 43 und an den außermittigen Exzenterwellen 03 gebildet sind (nicht dargestellt).

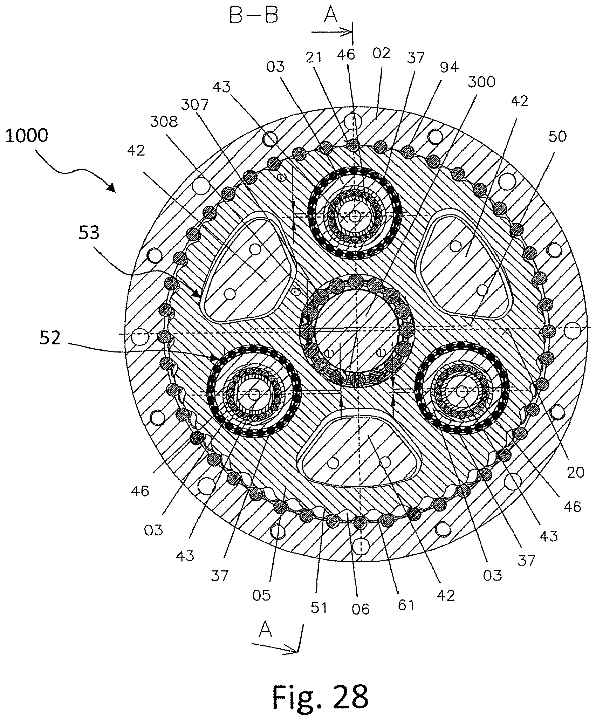

Fig. 27, Fig. 28 zeigen ein Ausführungsbeispiel eines Getriebes 1000 mit durch ausschließlich einseitig des Hohlrads 02 angeordnete Lagerelemente 26, 27 gebildetem Ausgangslager.

Das Getriebe 1000 kann mit Fortsätzen 43 am Drehkörper 04 ausgestattet sein, welche zu Vorsprüngen mit Laufflächen für Lagerelemente 45, 46 ausgebildet sind. Auf den Laufflächen sind die mit exzentrischen Abschnitten 31, 32 versehenen außermittigen Exzenterwellen 03 mittels Wälzlagerungen drehbar gelagert angeordnet.

Die Fortsätze 43 mit den auf oder an ihnen drehbar gelagerten außermittigen Exzenterwellen 03 wandeln zusätzlich die Bewegungen der einen oder mehreren Zykloidenscheiben 05, 06 bei deren Abwälzung im Hohlrad 02 in eine Rotationsbewegung des Drehkörpers 04 sowie eines gegebenenfalls mit diesem verbundenen Flanschs 07 um.

Das Getriebe 1000 verfügt über eine sich entlang einer mit der Hohlradachse 20 übereinstimmenden Achse 003 erstreckende zentrale Exzenterwelle 300. Diese kann als Antriebswelle vorgesehen sein. Sie verfügt über eine der Zahl der Zykloidenscheiben 05, 06 entsprechende Zahl von exzentrischen Abschnitten 301, 302. Auf den exzentrischen Abschnitten 301, 302 sind die Zykloidenscheiben 05, 06 mit einer zentralen Öffnung drehbar gelagert angeordnet.

Bei dem in Fig. 29 teilweise gezeigten Getriebe 1000 ist darüber hinaus auf der zentralen Exzenterwelle 300 ein Rad 08a befestigt, über welches dann das Getriebe angetrieben wird beziehungsweise ist.

Ein in Fig. 30 teilweise dargestelltes Getriebe 1000 mit durch ausschließlich einseitig des Hohlrads 02 angeordnete Lagerelemente 26, 27 gebildetem Ausgangslager verfügt über lediglich eine Zykloidenscheibe 06. Ferner sind bei diesem Getriebe 1000 Rollenwälzlager 45d verwendet. An dem Drehkörper 04 des Getriebes 1000 sind Fortsätze 43 angeordnet, auf denen jeweils einen exzentrischen Abschnitt 31 aufweisende außermittige Exzenterwellen 03a mittels Rollenwälzlagern 45d drehbar gelagert sind.

Ein in Fig. 31 dargestelltes Getriebe 10 verfügt über beidseitig des Hohlrads 02 angeordnete Lagerelemente 201, 202.

Das Getriebe 10 weist zwei im Hohlrad 02 abwälzende Zykloidenscheiben 05, 06 und eine sich entlang der Hohlradachse 20 durch das Getriebe 10 hindurch erstreckende Durchgangsöffnung 09 auf.

An dem Drehkörper 04 des Getriebes 10 sind Fortsätze 43 angeordnet, auf denen jeweils einen exzentrischen Abschnitt 31 aufweisende außermittige Exzenterwellen 03a mittels Lagerelemente 45, 46 drehbar gelagert sind

Wichtig ist hervorzuheben, dass das Getriebe 01 und das Getriebe 1000 mit einem durch ausschließlich einseitig des Hohlrads 02 angeordnete Lagerelemente 26, 27 gebildeten oder ausschließlich einseitig des Hohlrads 02 angeordnete Lagerelemente 26, 27umfassenden Ausgangslager auf einer Seite des Getriebes ausgestattet sind

Ein Ausgangslager mit Kreuzrollen 27 und 26 ist zwischen dem Trägerkörper 02, Ring 22 und 24 und Austrittsflansch 04 integriert.

Ferner zeigen Fig. 14 a) bis 14 i) weitere Ausführungen und Konstruktionsanordnungen des Ausgangslagers, welches nur auf der Austrittsseite des Getriebes 01 angeordnet ist.

An dem Ring 22 befindet sich die Fläche 23 und an dem Ring 24 die Fläche 25, welche die Außennute V des Ausgangslagers mit beispielsweise Kreuzrollen umfassenden Lagerelementen 27 bilden.

Die Innennute V des Ausgangslagers mit Kreuzrollen ist durch die Flächen 41 im Drehkörper 04 des Getriebes 01, 1000 gebildet.

Die Dichtung von der Austrittsseite des Getriebes 01, 1000 gewährleistet, dass zwischen dem beispielsweise als Trägerkörper dienenden oder einen solchen umfassenden Hohlrad 02 und dem Ring 24 eine Dichtung 91 vorgesehen ist. Diese Dichtung 91 kann entweder als O-Ring oder als Dichtungsmasse ausgeführt sein, um nur einige denkbare Ausgestaltungen zu nennen.

Zwischen dem Ring 24 und dem Drehkörper 04 kann eine Austrittsdichtung angeordnet sein.

Vorteile gegenüber dem Stand der Technik ergeben sich unter anderem wie folgt angegeben:
Das beispielsweise als Trägerkörper ausgebildete Hohlrad 02 kann aus einem kostengünstigeren Werkstoff hergestellt werden. Alternativ kann ein Werkstoff mit spezifischen Eigenschaften zum Einsatz kommen. Darüber hinaus kann das Hohlrad 02 mit preisgünstigerer Technologie, wie etwa durch Gießen, beispielsweise Spritzgießen hergestellt werden gerade dank der Konstruktion mit den Ringen 22 und 24. Somit ist es nicht notwendig, dass das Hohlrad 02 aus einem hochwertigen Lagerwerkstoff ist und es sind keine technologischen Verfahren zur Verarbeitung des Lagerwerkstoffs, wie etwa Härten notwendig.

Hohe Parameter des Lagers - radiale, axiale Steifigkeit und Wanksteifigkeit

Hohe und gleichmäßige Steifigkeit dieses Lagers am ganzen Umfang des Drehkörpers 04 im Gegensatz zum Stand der Technik, wo die Wanksteifigkeit wechselhaft ist, weil die Steifigkeit und/oder Form der gekoppelten Komponente des Flansches 07 und des Drehkörpers 04 variabel ist, durch das die Wanksteifigkeit der Ausgangslager übertragen wird.

Einfachere Ausführung des Getriebes, weil das Ausgangslager nur auf der Austrittsseite ist und die Spielausgleichung des Ausganglagers nur direkt im Bereich für die Kreuzrollen ist. Beim Stand der Technik ist die Spielausgleichung im Paar der Ausganglager über die ganze Kette bestehend aus dem Hohlrad 02, Lagerpaar und Verbindung des Flansches 07 mit dem Drehkörper 04 mittels Schrauben 98 und Stifte 98b.

Indem das Getriebe 01, 1000 praktisch von der Eingangsseite offen ist, ist ein besserer Zugang für das Schmiermedium, eine bessere Wärmeabführung und bessere Montagebedingungen im Gegensatz zum Stand der Technik gewährleistet.

Bei dem Getriebe 01, 10, 1000 kann das Hohlrad 02 mit einer Innenverzahnung versehen sein, welche die Zykloidenscheiben 05, 06 mit einer Außenverzahnung kämmen. Dabei kann die Innenverzahnung eine gerade oder eine ungerade Anzahl von Zähnen aufweisen.

Die Innenverzahnung am Hohlrad 02 kann durch Halbkreisnuten 21 gebildet sein, in denen Wälzelemente 94 angeordnet sind. Dabei können auch nur einige durch Nuten 21 in denen Wälzelemente 94 liegen gebildete Zähne der Innenverzahnung im Hohlrad 02 ausgebildet sein. Dies ist dadurch begründet, dass bei einem Zykloidgetriebe nicht alle konstruktiv vorgesehenen Zähne vorhanden sein müssen, damit das Zykloidgetriebe ordnungsgemäß arbeitet. Es kann durchaus beispielsweise jeder zweite Zahn der Innenverzahnung des Hohlrads 02 fehlen, ohne dass die Funktionsweise des Zykloidgetriebes beziehungsweise der Zykloidgetriebestufe eingeschränkt wäre.

Bei dem Getriebe 01, 10, 1000 kann der Drehkörper 04 mit dem Flansch 07 beziehungsweise können der Drehkörper 04 und der Flansch 07 miteinander beispielsweise durch Verbindungselemente wie etwa Stifte 98b und Schrauben 98 zu einer Einheit verbunden sein.

Das Getriebe 01, 10, 1000 weist mindestens eine Zykloidenscheibe 05, 06 mit als Außenverzahnung ausgeführter Verzahnung 51, 61 auf. Die Zykloidenscheiben 05, 06 greifen mit der Verzahnung 51, 61 in die Innenverzahnung am Hohlrad 02 ein, welche aus Wälzelementen 94 in den Nuten 21 der Innenverzahnung im Hohlrad 02 gebildet ist.

Die Getriebe 01, 10, 1000 verfügen über mindestens zwei jeweils mindestens einen exzentrischen Abschnitt 31, 32 aufweisende außermittige Exzenterwellen 03.

Die Zeichnungen zeigen mit Ausnahme von Fig. 30 zwei exzentrischen Flächen 31 und 32, die gegenseitig um etwa 180 Grad gedreht und gleichzeitig gegenüber der zentrischen Wellenachse 30 der außermittigen Exzenterwelle 03 um die Exzentrizität "e" versetzt sind, und an denen beispielsweise gemäß Fig. 1 Wälzelemente 34 und 36 angeordnet sind, die in Käfigen 35 und 37 gefangen sein können, oder gemäß Fig. 8 Wälzlager 38 und 39 angeordnet sind.

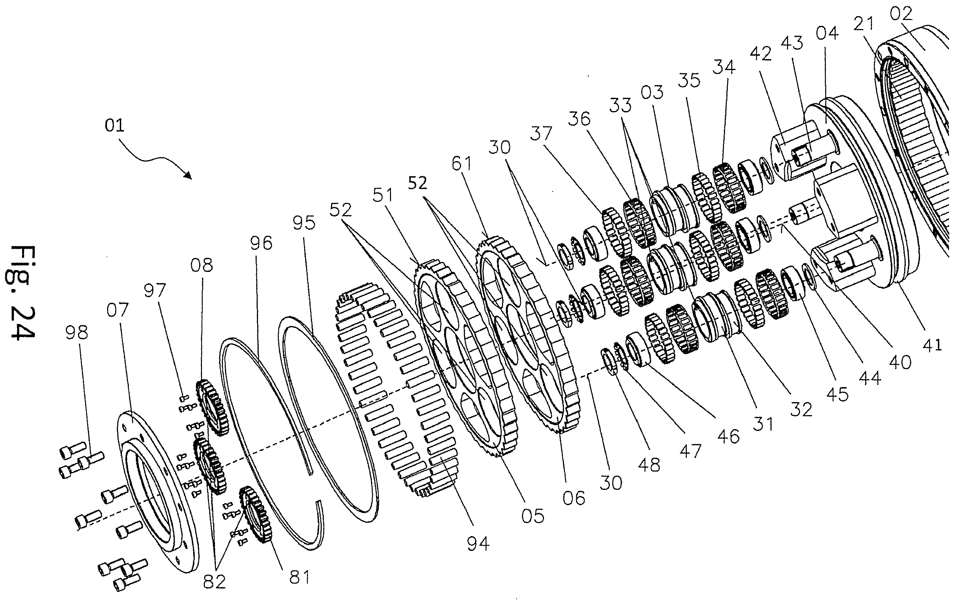

An diesen auf diese Art gebildeten exzentrischen Lagern sind über die außermittigen Öffnungen 52 die Zykloidenscheiben 05 und 06 drehbar gelagert (Fig. 24).

Die außermittigen Exzenterwellen 03 sind über zwei zentrische Lager 45 und 46 sowohl in dem Drehkörper 04, als auch in dem mittels durch Stifte 98b und Schrauben 98 gebildete Verbindungselemente mit dem Drehkörper 04 verbundenen Flansch 07 gelagert.

Für die Lagerung der außermittigen Exzenterwellen 03 in dem Flansch 07 und dem Drehkörper 04 kann ein Paar von Kegelrollenlager verwendet werden, wie in Fig. 1 dargestellt.

Wälzelemente 45b, 46b, die in Käfigen 44b und 47b gefangen sein können, können auf direkt an den außermittigen Exzenterwellen 03 eingearbeiteten Laufflächen abwälzen, wie in Fig. 7 dargestellt.

Alternativ können die außermittigen Exzenterwellen 03 mittels Lagern 45c und 46c im Drehkörper 04 und im Flansch 07 drehbar gelagert angeordnet sein, wie in Fig. 8 dargestellt.

Fig. 14 zeigt mehrere Ausführungen und Konstruktionsanordnungen des Ausgangslagers, welches nur einseitig des Hohlrads 02 angeordnete Lagerelemente 26, 27 umfasst. Bei der einen Seite, auf der die Lagerelemente 26, 27 vorgesehen sind, handelt es sich bevorzugt um die Austrittsseite des Getriebes.

Fig. 14 a) Ein Ausführungsbeispiel des Getriebes mit einem Ausgangslager mit einem einteiligen Hohlrad 02 in dem direkt eine Außennute V des Lagers mit Kreuzrollen 27 integriert ist.

Fig. 14 b) Ein Ausführungsbeispiel des Getriebes mit einem Ausgangslager mit zwei Reihen von Kreuzrollen 27 bzw. mit mehr als einer Reihe von Wälzelementen zur Erhöhung der Tragfähigkeit des Ausgangslagers vom Getriebe.

Fig. 14 c) Ein Ausführungsbeispiel des Getriebes, wo der Außenring des Ausgangslagers aus einem Hohlrad 02 und Ring 24 besteht, zwischen denen eine Nute V des Lagers mit Kreuzrollen 27 gebildet ist.

Fig. 14 d) Ein Ausführungsbeispiel des Getriebes, wo der Außenring des Ausgangslagers aus Ringen 22 und 24 besteht, die an das Hohlrad 02 befestigt sind. Der Innenring des Ausgangslagers besteht aus den Ringen 04a und 04b, die an den Drehkörper 04 mit Schrauben 99 befestigt sind. Es handelt sich praktisch um die Befestigung des Ausgangslagers mittels Verbindungselemente - Öffnungen, in den Ringen 22, 24, 04a a04b an das Getriebe.

Fig. 14 e) Ein Ausführungsbeispiel des Getriebes, wo an das Getriebe ein Ausgangslager 100 ohne Verbindungsöffnungen befestigt ist. Es bedarf die Verwendung von einem Ring 22 und 24 und Zusatzflansch 04c, der über Schrauben 101 an den Austrittsflansch des Getriebes angeschraubt wird und die Verbindung wird mit der Dichtung 102 und 103 abgedichtet.

Fig. 14 f) Ein Ausführungsbeispiel des Getriebes mit einem Ausgangslager, wo die Wälzelemente Kreuzkegelrollen 27a sind.

Fig. 14 g) Ein Ausführungsbeispiel des Getriebes mit einem Ausgangslager mit kugelförmigen Wälzelementen 27b hat. Eignet sich für Anwendungen, bei denen eine geringere Reibung im Ausgangslager erforderlich ist.

Fig. 14 h) Ein Ausführungsbeispiel des Getriebes mit einem Ausgangslager, wo die Wälzelemente 27c abwechselnd als durch Separatoren getrennt angeordnete radiale und axiale Zylinderrollen ausgebildet sind und die Wälzelemente 26c als durch axiale Separatoren getrennt angeordnete axiale Zylinderrollen ausgeführt sind.

Fig. 14 i) Ein Ausführungsbeispiel des Getriebes mit einem Ausgangslager, wo die Wälzelemente 26d als zwei Reihen von durch axiale Separatoren getrennt angeordnete Zylinderrollen ausgebildet sind und die Wälzelemente 27d ein radiales Zylinderrollenlager bilden.

Bei den in Fig. 15 bis Fig. 24 gezeigten Getrieben 01 sind am Drehkörper 04 mindestens zwei Fortsätze 43 vorgesehen. Beispielsweise können die Fortsätze 43 Zylinderflächen aufweisen, an denen mittels Innenringe ein Paar von Kegelrollenlagern 45 und 46 eingesetzt sind.

Die Spielausgleichung in den Kegelrollenlagern 45 und 46, die in den Fortsätzen 43 des Drehkörpers 04 eingesetzt sind, ist durch die Sicherungsmutter 48 begrenzt. Diese ist wiederum durch Sicherungsunterlegscheiben 47 gesichert.

Auf den exzentrischen Abschnitten 31, 32 sind vorzugsweise Wälzlager angeordnet, die aus Wälzelementen 35 und 37 gebildet sind, welche in Käfigen 34 und 36 beherbergt sein können. Auf den auf diese Art gebildeten exzentrischen Abschnitten 31, 32 sind die Zykloidenscheiben 05 und 06 mit ihren hierfür vorgesehenen außermittigen Durchgangsöffnungen 52 gelagert.

Auf den außermittigen Exzenterwellen 03 können Formflächen 33 gebildet sein, die gegenüber den exzentrischen Flächen 31 und 32 ausgerichtet sind (Fig. 24).

Auf den außermittigen Exzenterwellen 03 sind Planetenräder 08 mit einer Verzahnung 81 angesetzt und greifen über die Formen 82 an den Planetenrädern 08 in die Formflächen 33 an den außermittigen Exzenterwellen 03 ein, wodurch deren gleiche Orientation gegenüber den exzentrischen Flächen 31 und 32 der außermittigen Exzenterwellen 03 sichergestellt wird.

Bei dem in Fig. 15, Fig. 16, Fig. 17, Fig. 18, Fig. 19, Fig. 20, Fig. 21, Fig. 22, Fig. 23, Fig. 24 dargestellten Getriebe 01 mit einer Durchgangsöffnung 09 greifen die Planetenräder 08 mit der Verzahnung 81 in die Verzahnung 85 des Sonnenrads 84. Dieses ist mit einem Rad mit einer Verzahnung 86 unverdrehbar verbunden. Die Verzahnung 89 eines als Antriebsrad dienenden Ritzels 88b kämmt mit der Verzahnung 86 des mit dem Sonnenrad 84 unverdrehbar verbundenen Rads.

Bei einer in Fig. 9, Fig. 10, Fig. 11, Fig. 12, Fig. 13 dargestellten Ausführung des Getriebes 01 greifen die Planetenräder 08 mit ihren Verzahnungen 81 unmittelbar in die Verzahnung 89b des als Sonnenrad angeordneten Ritzels 88b ein.

An dem Drehkörper 04 können ferner ein oder mehrere, beispielsweise drei, Elemente 42 ausgebildet und/oder angeordnet sein.

Der Flansch 07 kann via der Elemente 42 mit dem Drehkörper 04 verbunden sein. Beispielsweise kann der Flansch 07 in die Elemente 42 eingesetzt sein.

Der Flansch 07 kann via der Elemente 42 und der Fortsätze 43 am Drehkörper 04 befestigt und/oder mit diesem verbunden sein.

Beispielsweise kann der Flansch mittels Schrauben 98 an den Elementen 42 und/oder den Fortsätzen 43 befestigt und somit mit dem Drehkörper 04 verbunden sein.

Die Elemente 42 dienen hauptsächlich zur Verstärkung der Befestigung des Flansches 07 an den Drehkörper 04 und zur Erhöhung der Steifigkeit dieser Verbindung.

Beim in Fig. 26 dargestellten Getriebe 01 sind anstatt der Kegelrollenlager 45 und 46 aus Fig. 15 für die Lagerung der außermittigen Exzenterwellen 03 Zylinderrollenlager 45a und 46a vorgesehen. Diese Zylinderrollenlager 45a und 46a können auch derart gebildet sein so, dass zwischen die integrierten Lagerflächen, die an den Fortsätzen 43 und den außermittigen Exzenterwellen 03 gebildet sind, in Käfigen gefasste Zylinder verwendet werden (ohne Darstellung).

Das in Fig. 27, Fig. 28 gezeigte Getriebe 1000 wird über eine zentrale Exzenterwelle 300 angetrieben.

Die zentrale Exzenterwelle 300 ist in einer Wälzlager zentrisch gelagert. Fig. 27, Fig. 28 zeigen ein Lager, welches durch Wälzelemente 307 gebildet ist, die in einem Käfig 308 gefangen auf einer am Flansch 07 ausgebildeten Lauffläche abwälzen können. In Fig. 27 ist außerdem ein Lager dargestellt, welches durch Wälzelemente 309 gebildet ist.

Die zentrale Exzenterwelle 300 weist mit mindestens einen exzentrischen Abschnitt 301, 302 auf. Fig. 27 zeigt eine zentrale Exzenterwelle 300 mit zwei exzentrischen Abschnitten 301, 302, die gegenseitig um etwa 180 Grad gedreht und gleichzeitig gegenüber der Hohlradachse 20 des Hohlrads 02 beziehungsweise gegenüber der Achse 003 der Welle um die Exzentrizität "e" versetzt sind.

Eine Zykloidenscheibe 05, 06 ist je exzentrischem Abschnitt 301, 302 über eine Fläche 501 und 601 an einem der exzentrischen Abschnitten 301 und 302 der zentralen Exzenterwelle 300 über exzentrische Lager bzw. Wälzelemente 303 und 305 in Käfigen 304 und 306 gelagert.

Im Gegensatz zum in Fig. 15 bis Fig. 24 dargestellten Getriebe 01 weist das Getriebe 1000 keine Planetenräder 08 auf.

Beim in Fig. 29 dargestellten Getriebe 1000 ist an der zentralen Exzenterwelle 300 ein Antriebsrad 08b mit einer Verzahnung 81b befestigt, über welches das Getriebe 1000 angetrieben werden kann.

Das in Fig. 29 dargestellte Getriebe 1000 ist mit nur einer Zykloidenscheibe 06 ausgestattet, welche über eine zentrale Exzenterwelle 300 angetrieben wird.

Die zentrale Exzenterwelle 300 weist einen exzentrischen Abschnitt 301 auf der gegenüber der zentralen Achse 003 der zentrale Exzenterwelle 300 um eine Exzentrizität "e" versetzt ist.

Die zentrale Exzenterwelle 300 ist gegenüber dem Flansch 07 vermittels eines Lagers bzw. vermittels Wälzelementen 307, die in einem Käfig 308 untergebracht sein können, zentrisch drehbar gelagert. Gegenüber dem Drehkörper 04 ist die zentrale Exzenterwelle 300 vermittels eines ein Lagers bzw. vermittels beispielsweise in einem Käfig 310 gehaltener Wälzelemente 309 drehbar gelagert.

Das Getriebe 1000 weist mindestens zwei außermittige Exzenterwellen 03a auf. Die außermittigen Exzenterwellen 03a sind über Lager 45d auf mindestens zwei Fortsätzen 43 des Drehkörpers 04 zentrisch gelagert.

Die Zykloidenscheibe 06 ist mit einer durch eine zentrale Durchgangsöffnung gebildete Fläche 501 auf dem exzentrischen Abschnitt 301 der zentralen Exzenterwelle 300 drehbar gelagert.

Zur drehbaren Lagerung dem exzentrischen Abschnitt 301 der zentralen Exzenterwelle 300 sind Wälzelemente 305a vorgesehen, die in einem Käfig 306a gelagert sind.

Jede der mindestens zwei außermittigen Exzenterwellen 03a ist mit ihrem exzentrischen Abschnitt 31a in einer außermittigen Öffnung 52 in der Zykloidenscheibe 06 drehbar gelagert. Zur Drehbaren Lagerung der außermittigen Exzenterwellen 03a mit ihren exzentrischen Abschnitten 31a in den außermittigen Öffnungen 52 der Zykloidenscheibe 06 können Wälzelemente 35 vorgesehen sein, die in Käfigen 34 gehalten sein können.

Die Getriebestufen des in Fig. 31 gezeigten Getriebes 10 sind beidseitig des Hohlrads 02 gelagert.

Hierbei ist der Drehkörper 04 über ein Lager 201 auf der einen Seite am Hohlrad 02 gelagert, und der mit dem Drehkörper 04 verbundene Flansch 07 über ein Lager 202 auf der anderen Seite am Hohlrad 02 gelagert.

Das Getriebe 10 ist mit:
- mindestens zwei Fortsätzen 43 auf dem Drehkörper 04,
- mindestens zwei außermittige Exzenterwellen 03, die mindestens einen exzentrischen Abschnitt 31 aufweisen, und
- mit mindestens einer Zykloidenscheibe 05, 06
ausgestattet.

Bei zwei oder mehr exzentrischen Abschnitten 31 und 32 sind diese gleichmäßig über eine Umdrehung verteilt angeordnet. Beispielsweise sind zwei exzentrische Abschnitte gegenseitig um etwa 180 Grad gedreht und gegenüber den jeweiligen zentrischen Achsen 30 der außermittigen Exzenterwellen 03 um die Exzentrizität "e" versetzt angeordnet.

Die außermittigen Exzenterwellen 03 sind über Wälzlager 45 und 46 auf den Fortsätzen 43 des Drehkörpers 04 zentrisch gelagert.

Die Anzahl der Zykloidenscheiben 05, 06 entspricht der Zahl der exzentrischen Abschnitte der außermittigen Exzenterwellen 03.

Die Zykloidenscheiben 05, 06 sind mit ihren außermittigen Öffnungen 52 über Wälzelemente 35 und 37, die in Käfigen 34 und 36 eingefügt sind, auf den exzentrischen Abschnitten 31 und 32 der außermittigen Exzenterwellen 03 drehbar gelagert.

Die Erfindung umfasst darüber hinaus in Fig. 27, Fig. 28, Fig. 29, Fig. 30 ganz oder in Teilen dargestellte Getriebe 1000 mit einem Hohlrad 02 mit einer Hohlradachse 20, mindestens einer in diesem abwälzenden Zykloidenscheibe 05, 06 mit mindestens einer außermittigen Öffnung, einem einseitig des Hohlrads 02 drehbar gelagerten Drehkörper 04 und einer oder mehreren gemeinsam um die Hohlradachse 20 umlaufend drehbar angeordneten und mit dem Drehkörper 04 verbundenen, drehbar gegenüber diesem gelagerten, außermittigen Exzenterwellen 03 mit einer der Anzahl der Zykloidenscheiben 05, 06 entsprechenden Zahl von exzentrischen Abschnitten 31, 32, mit denen die außermittigen Exzenterwellen 03 in jeweils einer außermittigen Öffnung der mindestens einen Zykloidenscheibe 05, 06 drehbar gelagert sind.

An dem Drehkörper 04 können ein oder mehrere Fortsätze 43 angeordnet sein, an jedem von denen eine außermittige Exzenterwelle 03 drehbar gelagert sein kann.

Der oder die Fortsätze 43 können Abwälzbewegungen der einen oder mehreren Zykloidenscheiben 05, 06 via der außermittigen Exzenterwellen 03 und deren Lagerungen an ihnen in Rotationsbewegungen des Drehkörpers 04 sowie eines gegebenenfalls mit diesem verbundenen Flanschs 07 umwandeln.

Ein Flansch 07 kann via einer der Zahl der außermittigen Exzenterwellen 03 entsprechenden Anzahl von Fortsätzen 43, an jedem von denen jeweils eine außermittige Exzenterwelle 03 drehbar gelagert angeordnet ist, mit dem Drehkörper 04 verbunden sein. Der oder die Fortsätze 43 sind außermittig am Drehkörper 04 und am Flansch 07 angeordnet. Beispielsweise können die Fortsätze 43 einstückig am Drehkörper 04 und/oder am Flansch 07 ausgebildet sein. Mit dem Gegenpart können sie durch Befestigungsmittel verbunden sein. Alternativ können sie in einen oder beide der beiden Gegenparte Drehkörper 04 - Flansch 07 eingesetzt sein, etwa in Form der beschriebenen Stifte 43a. Alternativ oder zusätzlich können sie an den Gegenparten oder an einem von beiden mittels Befestigungsmitteln, wie etwa Schrauben, befestigt sein.

Zur Versteifung der Verbindung zwischen Drehkörper 04 und Flansch 07 können Elemente 42 vorgesehen sein, welche durch außermittige Durchgangsöffnungen in den Zykloidenscheiben 05, 06 hindurchreichen. Diese Elemente 42 können grundsätzlich ebenso alternativ oder zusätzlich dafür vorgesehen sein, Abwälzbewegungen der einen oder mehreren Zykloidenscheiben 05, 06 in Rotationsbewegungen des Drehkörpers 04 umzuwandeln.

Außerdem ist ein in Fig. 31 dargestelltes mehrstufiges Getriebe 10 Gegenstand der Erfindung, welches eine Planetengetriebestufe mit einem Sonnenrad 84 und mindestens ein Planetenrad 08 sowie eine Zykloidgetriebestufe mit einem Hohlrad 02 mit einer Hohlradachse 20, mindestens einer in diesem abwälzenden Zykloidenscheibe 05, 06 mit mindestens einer außermittigen Öffnung, und einer der Anzahl der Planetenräder 08 entsprechenden Zahl von gemeinsam um die Hohlradachse 20 umlaufend drehbar angeordneten und mit jeweils einem Planetenrad 08 unverdrehbar verbundenen außermittigen Exzenterwellen 03 mit einer der Anzahl der Zykloidenscheiben 05, 06 entsprechenden Zahl von exzentrischen Abschnitten 31, 32, mit denen die außermittigen Exzenterwellen 03 in jeweils einer außermittigen Öffnung der mindestens einen Zykloidenscheibe 05, 06 drehbar gelagert sind, umfasst.

Das Getriebe 10 umfasst außerdem einen Drehkörper 04, der auf einer Seite des Hohlrads 02 um die Hohlradachse 20 drehbar gelagert ist.

Ferner umfasst das Getriebe 10 einen Flansch 07, der unverdrehbar mit dem Drehkörper 04 verbunden ist.

Das Sonnenrad 84 des Getriebes 10 ist vorteilhaft am Flansch 07 drehbar gelagert.

Der Flansch 07 ist auf der derjenigen Seite, an dem der Drehkörper 04 drehbar am Hohlrad 02 gelagert ist, gegenüberliegenden Seite am Hohlrad 02 drehbar gelagert.

Am Drehkörper 04 und/oder am Flansch 07 sind ein oder mehrere Fortsätze 43 angeordnet, via denen Drehkörper 04 und Flansch 07 miteinander verbunden sein können. Die Anzahl der Fortsätze 43 entspricht dabei der Zahl der außermittigen Exzenterwellen 03. An jedem Fortsatz 43 ist eine außermittige Exzenterwelle 03 drehbar gelagert.

Darüber hinaus kann das Getriebe 10 zur Stabilisierung der Verbindung des Flansches 07 mit dem Drehkörper 04 ein oder mehrere Elemente 42 umfassen, welche durch außermittige Öffnungen an der mindestens einen Zykloidenscheibe 05, 06 hindurch den Flansch 07 mit dem Drehkörper 04 verbinden. Flansch 07 und Drehkörper 04 bilden hierbei miteinander via einem oder mehreren Elementen 42 miteinander unverdrehbar verbundene Gegenparte. Das oder die Elemente 42 können beispielsweise einstückig an einem der Gegenparte ausgebildet sein. Möglich ist auch eine beispielsweise mittige Teilung der Elemente 42 etwa auf halbem Abstand zwischen Flansch 07 und Drehkörper 04. Erwiesenermaßen vorteilhaft hat sich in diesem Zusammenhang erwiesen, die Flächen, mit denen die Abschnitte der Elemente 42 aneinander befestigt sind, nicht eben, sondern miteinander korrespondierend beispielsweise gewellt auszuführen. Hierdurch kann eine Selbstzentrierung beim Zusammenbau erhalten werden. Grundsätzlich ist dies auch in Zusammenhang ohne eine Teilung der Elemente 42 möglich.

Bei mehreren, insbesondere einer geraden Anzahl von Elementen 42 kann abwechselnd eines am Drehkörper 04 und eines am Flansch 07 angeordnet sein, beispielsweise einstückig mit dem entsprechenden Gegenpart verbunden. Am verbleibenden Gegenpart können Befestigungsmittel, etwa Schrauben, zur Herstellung einer starren Verbindung vorgesehen sein. Grundsätzlich können die Elemente 42 an beiden Gegenparten mittels Befestigungsmitteln wie etwa Schrauben befestigt sein.

Durch entsprechende Ausgestaltung eines Kontakts zwischen den Elementen 42 und den Wandungen der außermittigen Durchgangsöffnungen in den Zykloidenscheiben 05, 06, durch welche die Elemente 42 hindurchreichen, können die Elemente 42 der Umwandlung der Abwälzbewegungen der Zykloidenscheiben 05, 06 im Hohlrad 02 in eine Rotationsbewegung des Drehkörpers 04 und des mit diesem verbundenen Flansches 07 dienen oder einer solchen Umwandlung beitragen.

Besonders vorteilhaft deckelt der Flansch 07 die Exzenterwellen 03 und die unverdrehbar mit diesen verbundenen Planentenräder 08. Bei dieser Ausgestaltung sind die mindestens eine Zykloidenscheibe 05, 06 und das mindestens eine Planetenrad 08 des Getriebes 10 zwischen dem Drehkörper 04 und dem Flansch 07 angeordnet. Dies hat eine besonders belastbare Ausgestaltung des Getriebes 10 zur Folge.

Wichtig ist hervorzuheben, dass eine solche Ausgestaltung auch für das Getriebe 01 gewählt werden kann, um dessen Belastbarkeit zu steigern.

Zwischen Drehkörper 04 und Flansch 07 befinden sich hierbei vorteilhaft in Reihenfolge vom Drehkörper 04 aus gesehen: Zykloidenscheiben 05, 06 sowie die unverdrehbar mit den außermittigen Exzenterwellen 03 verbundenen Planetenräder 08.

Das Getriebe 01, 10, 1000 kann alternativ oder zusätzlich einzelne oder eine Kombination mehrerer einleitend in Verbindung mit dem Stand der Technik und/oder in einem oder mehreren der zum Stand der Technik erwähnten Dokumente und/oder in der voranstehenden Beschreibung erwähnte Merkmale aufweisen.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von Getrieben, beispielsweise solchen für Stellantriebe, gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Getriebe
- 02: Hohlrad
- 03: außermittige Exzenterwelle
- 03a: außermittige Exzenterwelle (Fig. 30, Fig. 31)
- 04: Drehkörper
- 04a: Ring des Ausgangslagers (Fig. 14 d))
- 04b: Ring des Ausgangslagers (Fig. 14 d))
- 04c: Zusatzflansch zu dem Flansch 07 (Fig. 14 e)
- 05: Zykloidenscheibe
- 06: Zykloidenscheibe
- 07: Flansch
- 08: Planetenrad
- 08a: Rad (Fig. 29)
- 09: Durchgangsöffnung (Figs. 1 bis 8)

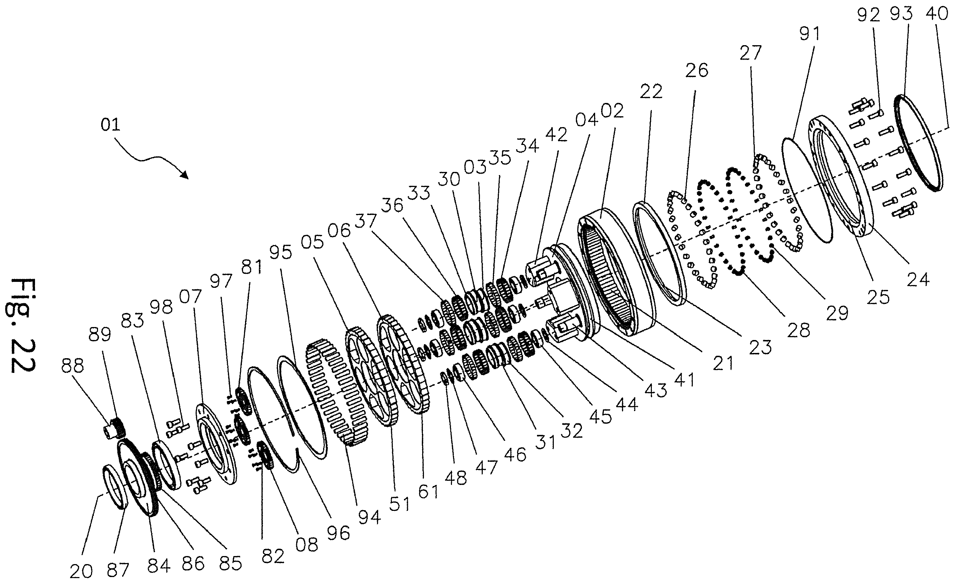

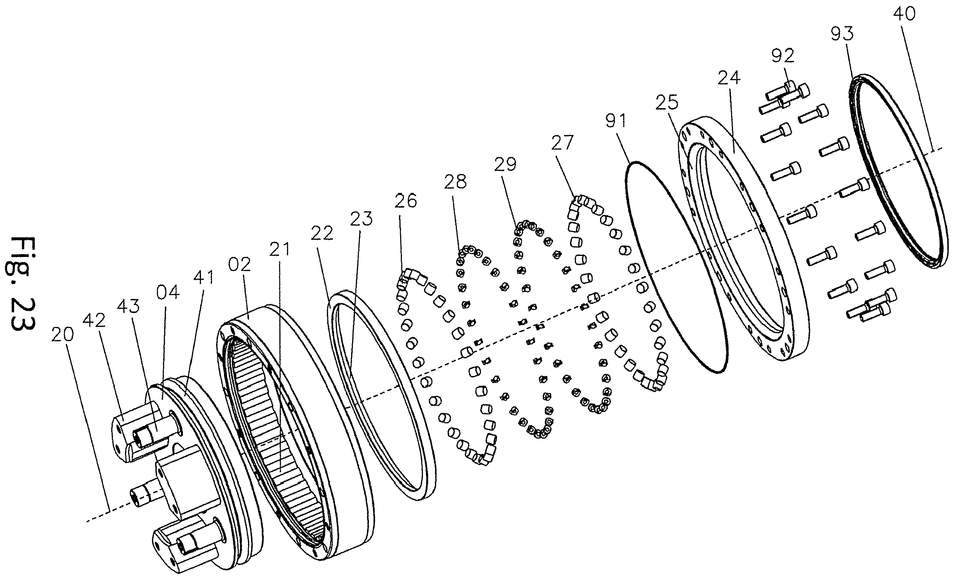

- 20: Hohlradachse
- 21: Nutung des Holrads 20
- 22: Ring
- 23: Nutenfläche V am Ring 22
- 24: Ring
- 25: Nutenfläche V am Ring 24
- 26: Lagerelement (Reihe von Kreuzrollen (Fig. 23))
- 26c: Wälzelemente 26c als Axialrollen angeordnet (getrennt z.B. durch Axialabscheider)
- 26d: Wälzelemente 26d als zwei Reihen von Axialrollen angeordnet (getrennt z.B. durch Axialabscheider) (Fig. 14 i))
- 27: Lagerelement (Reihe von Kreuzrollen (Fig. 23))
- 27a: Kreuzkegelrollen (Kegelrollenlager) (Fig. 14 f))
- 27b: Lager mit kugelförmigen Wälzelementen (Fig. 14 g))
- 27c: Wälzelemente als eine Reihe von Axialrollen angeordnet (Fig. 14 h))
- 27d: Wälzelemente als eine Reihe von Radialrollen angeordnet (Fig. 14 i))
- 28: eine Reihe von Abscheidern (Fig. 22, Fig. 23)
- 29: eine Reihe von Abscheidern (Fig. 22, Fig. 23)
- 30: Wellenachse der außermittigen Exzenterwelle 03
- 31: exzentrischer Abschnitt der außermittigen Exzenterwelle 03
- 32: exzentrischer Abschnitt der außermittigen Exzenterwelle 03
- 31a: exzentrischer Abschnitt der außermittigen Exzenterwelle 03a (Fig. 30, Fig. 31)
- 32a: exzentrischer Abschnitt der außermittigen Exzenterwelle 03a (Fig. 30, Fig. 31)
- 33: Formfläche auf der außermittigen Exzenterwelle 03
- 34: Wälzelement
- 35: Käfig für Wälzelement 34
- 36: Wälzelement
- 37: Käfig für Wälzelement 36
- 38: Wälzlager
- 39: Wälzlager
- 40: Achse des Drehkörpers 04
- 41: V Nuten des Lagers mit Kreuzrollen im Drehkörper 04
- 42: Element
- 43: Fortsatz
- 43a: Stift (im Drehkörper 04 als Fortsatz 43 eingesetzt; Fig. 25)
- 44: Unterlegscheibe
- 44b: Käfig (Fig. 7)
- 45: Lagerelement (Kegelrollenlager von der Austrittsseite des Getriebes)
- 45a: Zylinderrollenlager (Fig. 26)
- 45b: Wälzelement (Fig. 7)
- 45c: Wälzlager
- 45d: Wälzlager (Fig. 30)
- 46: Lagerelement (Kegelrollenlager von der Eintrittsseite des Getriebes)
- 46a: Zylinderrollenlager (Fig. 26)
- 46b: Wälzelement (Fig. 7)
- 46c: Wälzlager
- 47: Sicherungsunterlegscheibe (Fig. 15)
- 47b: Käfig für Wälzelement 45b (Fig. 7)
- 48: Sicherungsmutter (Fig. 15)

- 50: Achse der Zykloidenscheibe 05
- 51: Verzahnung der Zykloidenscheibe 05
- 52: außermittige Öffnung (in Zykloidenscheibe für Exzenterwelle 03)
- 53: außermittige Öffnung (Formöffnung in Zykloidenscheibe für Element 42)

- 60: Achse der Zykloidenscheibe 06
- 61: Verzahnung der Zykloidenscheibe 06

- 81: Verzahnung des Planetenrads 08
- 81a: Verzahnung des Rads 08a (Fig. 29)
- 82: Formfläche des Planetenrads 08
- 83: Lager zur Lagerung des Sonnenrads 84 am Flansch 07
- 84: Sonnenrad
- 85: Verzahnung (zum Eingriff in die Verzahnungen 81 der Planetenräder 08)
- 86: Verzahnung (zum Eingriff in die Verzahnung 89 des Rads 88)
- 87: Lagerung des Sonnenrads 84
- 88: Ritzel
- 88b: Ritzel (Fig. 9)
- 89: Verzahnung des Rads 88
- 89b: Verzahnung (zum Eingriff in Verzahnungen 81 der Planetenräder 08; Fig. 9)

- 91: Dichtung (O-Ring zwischen Hohlrad 02 und Ring 24)
- 92: Schraube (Befestigung Hohlrad 02 - Ring 24 oder Ring 22, 24 (Fig. 14d))
- 93: Austrittdichtung
- 94: Wälzelement (in Nuten 21 des Hohlrads 02)
- 95: Unterlegscheibe
- 96: Sicherungsring
- 97: Schraube (Befestigung Rad 08a - Flansch 07; Fig. 29)
- 98: Schraube (Verbindung Drehkörper 04 - Flansch 07)
- 98b: Stift (kegelförmig; in Verbindung mit Drehkörper 04 und Flansch 07)
- 99: Schraube (Befestigung Ring 04a, 04b am Flansch 07; Fig. 14 d))
- 100: Ausgangslager (als Einheit; Fig. 14 e))
- 101: Schraube (Befestigung Zusatzflansch 04c an Drehkörper 04; Fig. 14 e))
- 102: Dichtung (O-Ring/Dichtungsmasse Zusatzflansch 04c - Drehkörper 04 ;Fig. 14 e))
- 103: Dichtung (O-Ring/Dichtungsmasse Zusatzflansch 04c - Drehkörper 04 ;Fig. 14 e))

- 201: Lagerelement (Fig. 31)
- 202: Lagerelement (Fig. 31)

- 300: zentrale Exzenterwelle (Fig. 27)
- 003: Achse der zentralen Exzenterwelle (Fig. 27)
- 301: exzentrischer Abschnitt der zentralen Exzenterwelle 300
- 302: exzentrischer Abschnitt der zentralen Exzenterwelle 300
- 303: Wälzelement am exzentrischen Abschnitt 301 der zentralen Exzenterwelle 300
- 304: Käfig für Wälzelemente 303
- 305: Wälzelement am exzentrischen Abschnitt 302 der zentralen Exzenterwelle 300
- 305a: Wälzelement am exzentrischen Abschnitt 301 (Fig. 30)
- 306: Käfig für Wälzelemente 305
- 306a: Käfig für Wälzelemente 305a (Fig. 30)
- 307: Wälzelement
- 308: Käfig für Wälzelemente 307
- 309: Wälzelement
- 310: Käfig für Wälzelemente 309
- 311: Dichtung

- 501: zentrale Öffnung der Zykloidenscheibe 05 für exzentrischen Abschnitt 302 der zentralen Exzenterwelle 300
- 502: zentrale Öffnung der Zykloidenscheibe 06 für exzentrischen Abschnitt 302 der zentralen Exzenterwelle 300

## Patentansprüche

1. Mehrstufiges Getriebe (01) mit einer Planetengetriebestufe mit einem Sonnenrad (84) und mindestens einem Planetenrad (08) und einer Zykloidgetriebestufe mit einem Hohlrad (02) mit einer Hohlradachse (20), mindestens einer in diesem abwälzenden Zykloidenscheibe (05, 06) mit mindestens einer außermittigen Öffnung, und einer der Anzahl der Planetenräder (08) entsprechenden Zahl von gemeinsam um die Hohlradachse (20) umlaufend drehbar angeordneten und mit jeweils einem Planetenrad (08) unverdrehbar verbundenen außermittigen Exzenterwellen (03) mit einer der Anzahl der Zykloidenscheiben (05, 06) entsprechenden Zahl von exzentrischen Abschnitten (31, 32), die in jeweils einer außermittigen Öffnung der mindestens einen Zykloidenscheibe (05, 06) drehbar gelagert sind, **gekennzeichnet durch** eine Lagerung seiner Getriebestufen gegenüber dem Hohlrad (02) einseitig des Hohlrads (02).

2. Getriebe nach Anspruch 1, wobei es eine zentrale Exzenterwelle (300) mit einer der Anzahl der Zykloidenscheiben (05, 06) entsprechenden Zahl von exzentrischen Abschnitten (301, 302) aufweist, auf jedem von denen eine Zykloidenscheibe (05, 06) drehbar angeordnet ist.

3. Getriebe nach Anspruch 2, wobei ein Rad (84) unverdrehbar mit der zentralen Exzenterwelle (300) verbunden ist.

4. Getriebe nach Anspruch 1, 2 oder 3, wobei es durch außermittige Öffnungen der mindestens einen Zykloidenscheibe (05, 06) hindurchgreifende Mittel (42, 43) aufweist, welche die Bewegungen der mindestens einen Zykloidenscheibe (05, 06) bei deren Abwälzung im Hohlrad (02) in eine Rotationsbewegung umwandeln.

5. Getriebe nach einem der Ansprüche 1 bis 4, wobei die Lagerelemente (26, 27) auf der der Planetengetriebestufe abgewandten Seite des Hohlrads (02) angeordnet sind.

6. Getriebe nach einem der voranstehenden Ansprüche, wobei es eine zusätzliche Getriebestufe umfasst.

7. Getriebe nach Anspruch 6, wobei die zusätzliche Getriebestufe ein mit dem Sonnenrad (84) der Planetengetriebestufe oder mit diesem unverdrehbar verbundenes Rad in Eingriff stehendes Ritzel (88) umfasst.

8. Getriebe nach einem der voranstehenden Ansprüche, wobei es eine zentrale Durchgangsöffnung (09) aufweist.

9. Getriebe nach einem der voranstehenden Ansprüche, wobei die außermittigen Exzenterwellen (03) an einem am Hohlrad (02) um die Hohlradachse (20) drehbar gelagerten Drehkörper (04) drehbar gelagert sind.

10. Getriebe (1000) mit einem Hohlrad (02) mit einer Hohlradachse (20), mindestens einer in diesem abwälzenden Zykloidenscheibe (05, 06) mit mindestens einer außermittigen Öffnung, einem einseitig des Hohlrads (02) drehbar gelagerten Drehkörper (04) und einer oder mehreren gemeinsam um die Hohlradachse (20) umlaufend drehbar angeordneten und gegenüber dem Drehkörper (04) drehbar gelagerten außermittigen Exzenterwellen (03) mit einer der Anzahl der Zykloidenscheiben (05, 06) entsprechenden Zahl von exzentrischen Abschnitten (31, 32), mit denen die außermittigen Exzenterwellen (03) in jeweils einer außermittigen Öffnung der mindestens einen Zykloidenscheibe (05, 06) drehbar gelagert sind.

11. Getriebe nach Anspruch 9 oder 10, wobei es einen unverdrehbar mit dem Drehkörper (04) verbundenen Flansch (07) umfasst.

12. Getriebe nach Anspruch 9, 10 oder 11, wobei am Drehkörper (04) sich parallel zur Hohlradachse (20) erstreckende Fortsätze (43) angeordnet sind, um welche die außermittigen Exzenterwellen (03) mit ihren exzentrischen Abschnitten (31, 32) drehbar angeordnet sind.

13. Mehrstufiges Getriebe (10), welches eine Planetengetriebestufe mit einem Sonnenrad (84) und mindestens einem Planetenrad (08) sowie eine Zykloidgetriebestufe mit einem Hohlrad (02) mit einer Hohlradachse (20), mindestens einer in diesem abwälzenden Zykloidenscheibe (05, 06) mit mindestens einer außermittigen Öffnung, und einer der Anzahl der Planetenräder (08) entsprechenden Zahl von gemeinsam um die Hohlradachse (20) umlaufend drehbar angeordneten und mit jeweils einem Planetenrad (08) unverdrehbar verbundenen außermittigen Exzenterwellen (03) mit jeweils einer der Anzahl der Zykloidenscheiben (05, 06) entsprechenden Zahl von exzentrischen Abschnitten (31, 32), mit denen die außermittigen Exzenterwellen (03) in jeweils einer außermittigen Öffnung der mindestens einen Zykloidenscheibe (05, 06) drehbar gelagert sind, umfasst, wobei es außerdem einen Drehkörper (04) umfasst, der auf einer Seite des Hohlrads (02) um die Hohlradachse (20) drehbar gelagert ist, sowie einen Flansch (07), der unverdrehbar mit dem Drehkörper (04) verbunden und auf der derjenigen Seite, an dem der Drehkörper (04) drehbar am Hohlrad (02) gelagert ist, gegenüberliegenden Seite am Hohlrad (02) drehbar gelagert ist, und wobei am Drehkörper (04) und/oder am Flansch (07) ein oder mehrere Fortsätze (43) angeordnet sind, wobei die Anzahl der Fortsätze (43) der Zahl der außermittigen Exzenterwellen (03) entspricht und an jedem Fortsatz (43) eine außermittige Exzenterwelle (03) drehbar gelagert ist.

14. Getriebe nach Anspruch 12 oder 13, wobei die Fortsätze (43) durch in den Drehkörper (04) eingesetzte Stifte gebildet sind.

15. Getriebe nach Anspruch 12 oder 13 oder einem auf diese rückbezogenen Anspruch, wobei der Flansch (07) die Exzenterwellen (03) und die unverdrehbar mit diesen verbundenen Planentenräder (08) deckelt, so dass die mindestens eine Zykloidenscheibe (05, 06) und das mindestens eine Planetenrad (08) zwischen dem Drehkörper (04) und dem Flansch (07) angeordnet sind.
